# EUROPÄISCHE PATENTSCHRIFT

(11) **EP 4 148 309 B1**
(45) Veröffentlichungstag und Bekanntmachung des Hinweises auf die Patenterteilung: **08.10.2025**
(21) Anmeldenummer: 21196163.6
(22) Anmeldetag: 10.09.2021
(51) Int. Cl.: F16K 31/00, F24D 19/10

(54) **ADAPTER ZUR VERBINDUNG EINES STELLANTRIEBS MIT EINEM STELLVENTIL**
ADAPTER FOR CONNECTING AN ACTUATOR WITH A CONTROL VALVE
ADAPTATEUR PERMETTANT DE RELIER UN ACTIONNEUR À UNE SOUPAPE DE RÉGLAGE

(43) Veröffentlichungstag der Anmeldung: 15.03.2023
(73) Patentinhaber: Eazy Systems GmbH, 31162 Bad Salzdetfurth (DE)
(72) Erfinder: SEELMANN, Florian, 31188 Holle (DE); BEIE, Lars, 31061 Alfeld (DE)
(74) Vertreter: Holz, Christian

(56) Entgegenhaltungen:
- DE-A1- 2 546 213
- DE-A1- 4 344 773
- DE-C2- 3 140 472
- DE-U1- 20 109 774

## Beschreibung

Die vorliegende Erfindung betrifft einen Adapter zur Verbindung eines Stellantriebs mit einem Stellventil gemäß dem Oberbegriff des Patentanspruchs 1, einen Fluidverteiler mit einem derartigen Adapter gemäß dem Patentanspruch 13 sowie ein Verfahren zum Verbinden eines Stellantriebs mit einem Stellventil mittels eines derartigen Adapters gemäß des Patentanspruchs 14.

Für verschiedene technische Anwendungen kann es erforderlich sein, den Durchfluss eines Fluids durch eine Fluidleitung zu regulieren. Hierfür können sogenannte Stellventile verwendet werden, welche auch als Regelarmaturen bezeichnet werden können. Das Stellventil kann zwischen einer vollkommen geöffneten und einer vollkommen geschlossenen Stellung stufenlos eingestellt werden und so den Durchfluss des Fluids durch sich hindurch verändern. Hierdurch können je nach technischer Anwendung zum Beispiel der Druck, die Temperatur oder die Durchflussmenge beeinflusst werden. Derartige Fluide können Gase sowie Flüssigkeiten sein. Derartige Stellventile können beispielsweise in Gebäuden bei Warmwasserheizungsanlagen sowie in der Gebäudeleittechnik verwendet werden. Mit anderen Worten können derartige Stellventile in der Heizungs-, Klima- und bzw. oder Lüftungstechnik eingesetzt werden. Die Veränderung der Einstellung des Stellventils kann mittels eines Antriebs erfolgen, welcher entsprechend als Stellantrieb bezeichnet und zum Beispiel elektrisch oder pneumatisch betrieben werden kann.

Zur Regulierung der Temperatur einzelner Räume eines Gebäudes können derartige Stellventile bei Fußbodenheizungen als die Ventile des Heizkreisverteilers verwendet werden. Einzelne Stellventile können auch bei einem jeweiligen Heizkörper bzw. Radiator als dessen Ventil eingesetzt werden. Entsprechend dieser Anwendung können derartige Stellventile auch als thermische Stellventile und deren Antriebe entsprechend als thermische Stellantriebe bezeichnet werden. In beiden Fällen sind die Stellventile üblicherweise mit einem Fluidkreislauf in Form des Rücklaufs des Heizungskreislaufs verbunden, um je nach Ventilstellung, welche mittels des thermischen Stellantriebs eingenommen werden kann, eine vorbestimmte Menge des Heizungswassers in den Heizkörper bzw. in die Rohre eines Abschnitts der Fußbodenheizung einströmen zu lassen. Die Stellung des Stellventils kann hierzu mittels des jeweiligen Stellantriebs von einem Thermostat in Abhängigkeit einer erfassten Raumtemperatur vorgegeben werden, sodass eine vom Benutzer vorgegebene Solltemperatur des Raums erreicht und eingehalten werden kann.

Bei der Montage derartiger Stellantriebe an einem Ventil zum Beispiel einer derartigen Heizungsanlage ist zu bedenken, dass das Stellventil und das Rohr als Fluidleitung der Heizungsanlage üblicherweise nicht vom selben Hersteller stammen wie die Stellantriebe. Stellen Stellantriebe eher mechatronische bzw. elektronische Komponenten zum Beispiel mit einem elektrischen Antrieb dar, so sind die Stellventile und Rohrleitungen eher dem Sanitärbereich als rein mechanische Bauteile zuzuordnen. Entsprechend ist eine Kompatibilität des Stellantriebs mit dem Stellventil, jeweils unabhängig vom Hersteller, erforderlich, um ein Zusammenwirken von Stellantrieb und Stellventil gewährleisten zu können.

Daher ist es bekannt, unterschiedliche Adapter als mechanische Schnittstelle vorzusehen, welche zwischen dem jeweils unterschiedlichen Stellventil und einem einheitlichen Stellantrieb angeordnet werden können, um das Stellventil und den Stellantrieb herstellerunabhängig miteinander zu verbinden und bestimmungsgemäß zusammenwirken zu lassen. Auf diese Weise sind lediglich unterschiedliche Adapter für die unterschiedlichen am Markt üblichen Stellventile vorzusehen. Der Stellantrieb hingegen kann einheitlich passend zu dem Adapter ausgebildet werden. Dies kann es vermeiden, für die unterschiedlichen am Markt verfügbaren Stellventile jeweils einen passenden Stellantrieb vorzusehen, was zu einer erheblichen Variantenvielfalt der Stellantriebe mit entsprechenden Kosten führen würde. Eine Anordnung zur Befestigung eines Stellelements an einem Ventil ist beispielsweise dem DE 201 09 774 U1 zu entnehmen.

Hinsichtlich der Funktionsweise derartiger Stellantriebe und Stellventile ist dabei zu beachten, dass üblicherweise das Stellventil eine vergleichsweise schwache Ventilfeder bzw. Rückstellfeder aufweist, mittels deren Federkraft ein Stößel des Stellventils entlang derselben Längsachse bewegt und hierdurch das Stellventil fluidführend geöffnet werden kann. Der Federkraft der Rückstellfeder des Stellventils wirkt dabei eine vergleichsweise starke Druckfeder des Stellantriebs entgegen, sodass das Stellventil grundsätzlich, d. h. im Normalzustand, von dem Stellantrieb geschlossen wird. Der Stellantrieb weist ferner ein Stellelement auf, welches bei Betätigung eine zusätzliche Kraft auf die Druckfeder des Stellantriebs ausüben und hierdurch die Bewegung der Rückstellfeder des Stellventils unterstützen kann. Somit können bei Betätigung des Stellelements des Stellantriebs das Stellelement des Stellantriebs und die Rückstellfeder des Stellventils gemeinsam die vergleichsweise starke Federkraft der Druckfeder des Stellantriebs überwinden und hierdurch das Stellventil öffnen. Das Stellelement des Stellantriebs kann beispielsweise mittels eines elektrischen Heizwiderstands in Kombination mit einem temperaturabhängigen Dehnkörper umgesetzt werden, siehe DE 31 40 472 C2.

Vorteilhaft ist hierbei die vergleichsweise einfache und bzw. oder kompakte Umsetzung der Ausübung der Antriebskraft bzw. der Stellkraft des Stellantriebs. Dies kann die Kosten und bzw. oder den Bauraum des Stellantriebs geringhalten.

Vorteilhaft ist insbesondere daran, dass die Federkraft der Druckfeder des Stellantriebs größer als die Federkraft der Rückstellfeder des Stellventils ist, dass bei einem unbetätigten bzw. unbestromten Stellelement des Stellantriebs das Stellventil in der Normalstellung geschlossen ist. Wird davon ausgegangen, dass in der meisten Zeit der Nutzung zum Beispiel einer Heizungsanlage kein Wärmebedarf besteht, so kann dadurch, dass das Stellventil im Normalzustand geschlossen ist ("normally closed", NC) und der Heizwiderstand des Stellelements des Stellantriebs stromlos bleibt, der Energieverbrauch des Stellantriebs geringgehalten werden.

Der Ventilstößel kann somit mittels der Rückstellfeder des Stellventils in Kombination mit der Druckfeder des Stellantriebs und des Stellelements des Stellantriebs entlang der Längsachse des Stellventils, welche mit der Längsachse des Stellantriebs zusammenfällt, bewegt werden, wie zuvor beschrieben. Dabei ist die Position des Ventilstößels des Stellventils bei geschlossenem Stellventil von besonderem Interesse, da ein am Stellventil zu verwendender Stellantrieb entsprechend eingestellt werden muss, um das Öffnen und Schließen des Stellventils wie zuvor beschrieben zu bewirken, d.h. der Stellantrieb muss bei unbetätigtem Stellelement mit seinem Stellelement genau an der Oberkante des Ventilstößels bei geschlossenem Stellventil anliegen, um zum Öffnen des Stellventils seinen vollen Stellweg ausnutzen sowie um das Stellventil vollständig schließen zu können. Dieses Maß des Ventilstößels wird als Schließmaß bezeichnet und ist als der Abstand, bei geschlossenem Stellventil mit einer definierten Schließkraft von z.B. 100 N, zwischen der Oberkante des Ventilstößels und der Auflagefläche des Anschlussgewindes des Stellventils definiert.

Um ein sicheres Schließen von Ventilen bei der Installation von z.B. Heizungsanlagen durch ein Stellelement eines Stellantriebs wie beispielsweise eines elektrothermischen Stellantriebes, eines motorischen Stellantriebes oder eines Thermostatkopfes zu erreichen, ist es somit notwendig, einen Stellantrieb mit einem zum jeweiligen Stellventil passenden Schließmaß zu verwenden. Da es nämlich keine gültige Norm für die Größe des Anschlussgewindes und für das Schließmaß von derartigen Stellventilen gibt, sind von verschiedenen Herstellern Stellventile mit unterschiedlichen Abmessungen bzw. Schließmaßen erhältlich.

Ist das Schließmaß des Stellventils bekannt, so kann ein Stellantrieb mit einem entsprechenden passenden Schließmaß ausgewählt, beschafft und verwendet werden. Dies kann bei einer Neuinstallation beispielsweise eines Heizkreisverteilers der Fall sein, indem Stellventile und Stellantriebe passend zueinander ausgewählt, beschafft und installiert werden, da die jeweiligen Daten inkl. Schließmaß der Stellventile in diesem Fall bekannt sind.

Bei einer Reparatur, einer Wartung bzw. einem Austausch von Stellantrieben kann jedoch davon ausgegangen werden, dass dem Installateur das Schließmaß der Stellventile nicht bekannt ist. Da, wie zuvor bereits erläutert, jedoch viele unterschiedliche Stellventile mit jeweils unterschiedlichen Schließmaßen sowie unterschiedliche Stellantriebe am Markt verfügbar sind, ist es für den Installateur bzw. Monteur entsprechend schwierig, einen passenden Stellantrieb für das Schließmaß des jeweiligen Stellventils zu finden. Insbesondere müsste der Installateur entsprechend viele unterschiedliche Stellantriebe bereithalten und zum Einsatzort mitführen, um die Reparatur, Wartung etc. unverzüglich durchführen zu können. Dies würde entsprechend viel Kapital für die bevorrateten Stellantriebe binden sowie Platz im Lager bzw. im Servicefahrzeug des Installateurs erfordern.

Zu beachten ist hierbei, dass das Schließmaß des Stellventils im Falle einer Reparatur, einer Wartung etc. vor Ort, d.h. im eingebauten und verwendeten Zustand des Stellventils, zu bestimmen wäre, um anhand des Wertes des Schließmaßes des Stellventils einen passenden Stellantrieb auswählen zu können. Das Schließmaß eines bestimmten Stellventils lässt sich jedoch lediglich in einer Werkstatt oder in einem Messlabor mit entsprechenden Messvorrichtungen ermitteln. Bei bereits in z.B. Heizungsanlagen montierten Stellventilen, oder falls keine Messvorrichtungen vorhanden sind, ist es jedoch sehr schwierig, das Schließmaß eines bestimmten Stellventils mit der erforderlichen Genauigkeit zu ermitteln.

Die DE 43 44 773 A1 beschreibt einen Thermostataufsatz für Heizkörperventile, der mit Hilfe eines Adapters für zwei Ventilgehäusetypen verwendbar ist, mit einer Befestigungsvorrichtung zum Anbringen am Ventilgehäuse und einer von einem temperaturabhängigen Arbeitselement axial verstellbaren Ventilstange zum Verlagern eines durch eine Rückstellfeder belasteten Stößels im Ventilgehäuse, wobei die Befestigungsvorrichtung zum direkten Anbringen des Aufsatzes an den wenigstens zwei Ventilgehäusetypen ausgebildet ist, wobei der Adapter durch zwei gegeneinander verstellbare und hierdurch die wirksame Länge der Ventilstange verändernde Stangenteile gebildet ist und wobei die durch Verstellung der Stangenteile vorgegebene Längenänderung so bemessen ist, daß die Sollwert-Justierung des Aufsatzes für beide Ventilgehäusetypen gilt.

Eine Aufgabe der vorliegenden Erfindung ist es, eine Möglichkeit zu schaffen, unterschiedliche Stellantriebe mit unterschiedlichen Stellventilen mit unterschiedlichen Schließmaßen kombinieren und verwenden zu können. Dies soll insbesondere möglichst flexibel, einfach, kostengünstig, intuitiv umsetzbar und bzw. oder bauraumsparend erfolgen können. Dies soll insbesondere für ein Stellventil eines Fluidverteilers, insbesondere eines Heizkreisverteilers, erfolgen.

Die Aufgabe wird erfindungsgemäß durch einen Adapter mit den Merkmalen des Patentanspruchs 1, durch einen Fluidverteiler mit den Merkmalen des Patentanspruchs 13 sowie durch ein Verfahren mit den Merkmalen des Patentanspruchs 14 gelöst. Vorteilhafte Weiterbildungen sind in den Unteransprüchen beschrieben.

Somit betrifft die vorliegende Erfindung einen Adapter zur Verbindung eines Stellantriebs mit einem Stellventil mit einem Adaptergehäuse mit einem Anschluss, vorzugsweise mit einem Gewinde, besonders vorzugsweise mit einem Innengewinde, für das Stellventil und mit einem Anschluss, vorzugsweise mit einem Gewinde, besonders vorzugsweise mit einem Außengewinde, für den Stellantrieb, welche sich entlang einer Längsachse gegenüberliegen. Die beiden Anschlüsse können dabei nach beliebigen mechanischen Wirkprinzipien umgesetzt werden, welche zum Erreichen des gewünschten Zweckes geeignet sind. Dies kann formschlüssig und bzw. oder kraftschlüssig erfolgen. Hierzu Gewinde zu verwenden kann eine besonders einfache, sichere und bzw. oder wirkungsvolle Umsetzung ermöglichen.

Der erfindungsgemäße Adapter ist gekennzeichnet durch ein erstes Übertragungselement, welches von dem Adaptergehäuse dem Stellantrieb zugewandt und entlang der Längsachse beweglich aufgenommen wird, und ein zweites Übertragungselement, welches von dem Adaptergehäuse dem Stellventil zugewandt und entlang der Längsachse beweglich aufgenommen wird, wobei das erste Übertragungselement und das zweite Übertragungselement ausgebildet sind, gemeinsam direkt oder indirekt entlang der Längsachse eine Stellkraft des Stellantriebs auf das Stellventil zu übertragen, wobei das erste Übertragungselement und das zweite Übertragungselement ausgebildet sind, gegenüber einander entlang der Längsachse derart bewegt zu werden, so dass die resultierende gemeinsame Länge von erstem Übertragungselement und zweitem Übertragungselement entlang der Längsachse derart verändert werden kann, dass das erste Übertragungselement und das zweite Übertragungselement direkt oder indirekt entlang der Längsachse mit einem Stellelement des Stellantriebs und mit einem Ventilstößel des Stellventils in Kontakt kommen.

Hierzu können beide Übertragungselemente gleichzeitig oder nacheinander gegenüber einander bewegt werden, d.h. es kann auch lediglich ein Übertragungselement relativ zu dem anderen Übertragungselement gleichzeitig bewegt werden. Es kann auch lediglich ein Übertragungselement gegenüber dem anderen Übertragungselement überhaupt bewegt werden, was auch eine Bewegung der beiden Übertragungselemente gegenüber einander entlang der Längsachse darstellen kann. Unter einer Bewegung der beiden Übertragungselemente gegenüber einander entlang der Längsachse ist somit eine Veränderung der resultierenden Länge der beiden Übertragungselement zu verstehen, unabhängig davon, ob beide Übertragungselemente gegenüber einander oder nur eines der beiden Übertragungselemente gegenüber dem anderen Übertragungselement bewegt wurden.

Mit anderen Worten ist erfindungsgemäß vorgesehen, dass der Adapter nicht nur einen Stellantrieb an einem Stellventil halten kann und vorzugsweise durch die entsprechende Ausbildung der Haltemechanismen ein bestimmter Stellantrieb mit unterschiedlichen Stellventilen verbunden werden kann, oder umgekehrt, wie eingangs beschrieben. Vielmehr ist zusätzlich vorgesehen, dass gleichzeitig seitens des erfindungsgemäßen Adapters das Schließmaß unterschiedlicher bzw. beliebiger Kombinationen von Stellantrieb und Stellventil eingestellt werden kann, um das passende Schließmaß zu erreichen und ohne dass erforderliche Schließmaß zu kennen. Dies kann die Möglichkeit schaffen, unterschiedliche Stellantriebe mit unterschiedlichen Stellventilen mit unterschiedlichen Schließmaßen zu kombinieren und zu verwenden.

Erfindungsgemäß wird hierzu zwischen dem Stellelement des Stellantriebs und dem Ventilstößel des Stellventils in dessen Kraftfluss seitens des erfindungsgemäßen Adapters ein längenveränderliches Element zur Kraftübertragung vorgesehen, sodass Kräfte zwischen Stellelement des Stellantriebs und Ventilstößel des Stellventils im Betrieb weiterhin wie bisher übertragen werden können. Dabei kann das längenveränderliche Element zur Kraftübertragung in seiner Länge entlang der Längsachse auf das jeweilige Schließmaß eingestellt werden, sodass das gewünschte Schließmaß gewährleistet werden kann, insbesondere, ohne das gewünschte Schließmaß kennen zu müssen.

Die Veränderbarkeit der Länge des Elements zur Kraftübertragung erfolgt dabei erfindungsgemäß durch zwei Übertragungselemente, welche zum einen mit dem Stellelement des Stellantriebs bzw. Ventilstößels des Stellventils direkt oder indirekt, beispielsweise mittels dazwischenliegender Körper, in Kontakt stehen und zum anderen gegenüber einander derart bewegt werden können, dass ihre resultierende gemeinsame Länge auf das gewünschte Schließmaß eingestellt werden kann. Dies kann durch unterschiedliche Arten der relativen Beweglichkeit und Positionierbarkeit mit mechanischen Mitteln erfolgen. Beispielsweise können die beiden Übertragungselemente von einander gelöst und in der gewünschten Länge neu zusammengesetzt werden. Auch können die beiden Übertragungselemente, beispielsweise durch Schienen, Nuten oder dergleichen entlang der Längsrichtung zueinander geführt, gelöst, bewegt und in der gewünschten Länge fixiert werden, was beispielsweise durch Rasten, Klemmen und dergleichen erfolgen kann. Erfindungsgemäß werden die beiden Übertragungselemente mittels korrespondierender Gewinde gegenüber einander gedreht bzw. ein Übertragungselement gehalten und das andere Übertragungselement gegenüber dem gehaltenen Übertragungselement gedreht und hierdurch in der gewünschten Länge eingestellt.

In jedem Fall wird es einer Person wie beispielsweise einem Monteur hierdurch ermöglicht, mittels des Adapters zum einen beispielsweise einen einheitlichen Stellantrieb mit unterschiedlichen Stellventilen zu verwenden, wie eingangs beschrieben. Zum anderen kann die Person erfindungsgemäß zusätzlich dann die beiden Übertragungselemente derart gegenüber einander entlang der Längsachse bewegen bzw. positionieren, dass der Abstand zwischen Stellelement des Stellantriebs und Ventilstößel des Stellventils von den beiden Übertragungselemente als längenveränderliches Element der Kraftübertragung überbrückt bzw. gefüllt werden kann, sodass eine Kraftübertragung wie bekannt zwischen dem Stellelement des Stellantriebs und dem Ventilstößel des Stellventils stattfinden kann, wie eingangs beschrieben. Durch das Einstellen der resultierenden Länge beiden Übertragungselemente kann dies unabhängig vom Schließmaß erfolgen, welches aus der jeweiligen Kombination von Stellantrieb und Stellventil resultiert.

Dies kann die Möglichkeiten erhöhen, einen einheitlichen Stellantrieb mittels des erfindungsgemäßen Adapters bei deutlich mehr unterschiedlichen Stellventilen als bisher bekannt verwenden zu können. Dies kann entsprechend die Variantenvielfalt von Stellantrieben reduzieren, was die Herstellungskosten der Stellantriebe reduzieren kann. Auch kann eine Person wie ein Installateur bzw. Monteur die Variantenvielfalt von Stellantrieben reduzieren, welche er für die Reparatur bzw. Wartung von beispielsweise Heizungsanlagen zur Verfügung haben und insbesondere zum Einsatzort mit sich führen muss.

Vorteilhaft ist insbesondere, dass das Schließmaß eines Stellventils nicht bekannt sein muss, um einen passenden Stellantrieb auszuwählen, da mittels des erfindungsgemäßen Adapters beliebige Stellantriebe an das Schließmaß des betreffenden Stellventils angepasst werden können. Dies kann insbesondere die Verwendung von neuen Stellantrieben bei Bestandsanlagen erleichtern. Dies kann auch zur Beschleunigung einer Reparatur, einer Wartung bzw. eines Austausches eines Stellantriebs führen.

Erfindungsgemäß weist das erste Übertragungselement ein Gewinde, vorzugsweise ein Innengewinde, auf, das zweite Übertragungselement weist ein Gewinde, vorzugsweise ein Außengewinde, auf und das erste Übertragungselement und das zweite Übertragungselement sind ausgebildet, gegenüber einander um die Längsachse derart gedreht zu werden, so dass die resultierende gemeinsame Länge von erstem Übertragungselement und zweitem Übertragungselement entlang der Längsachse verändert werden kann. Dies kann, wie zuvor bereits erwähnt, eine Möglichkeit der konkreten Umsetzung der Längenveränderlichkeit des Elements zur Kraftübertragung darstellen. Vorteilhaft kann hierbei sein, dass durch die Drehbewegung der beiden Übertragungselemente gegenüber einander eine stufenlose Einstellung der resultierenden Länge erfolgen kann. Hierzu kann auch lediglich eines der beiden Übertragungselemente gegenüber dem anderen Übertragungselement verdreht werden, welches stillstehen bzw. gehalten werden kann. Auch kann die eingestellte Position aufgrund der Reibung der Gewinde untereinander sowie der Kraftübertragung zwischen Stellantrieb und Stellventil im Wesentlichen senkrecht zur Steigerung der Gewinde zumindest im Wesentlichen selbsttätig gehalten werden, sodass auf zusätzliche Fixierungsmittel gegebenenfalls verzichtet werden kann.

Gemäß einem weiteren Aspekt der Erfindung wird das erste Übertragungselement oder das zweite Übertragungselement um die Längsachse verdrehsicher von dem Adaptergehäuse aufgenommen. Dies kann das Verdrehen der beiden Übertragungselemente gegenüber einander zum Verändern der resultierenden Länge vereinfachen, da eines der beiden Übertragungselemente vom Adaptergehäuse in der Umfangsrichtung gehalten und das andere der beiden Übertragungselemente von einer Person wie beispielsweise von einem Monteur bewegt bzw. gedreht werden kann. Dies kann die Person davon entlasten, beide Übertragungselemente gleichzeitig handhaben und beide Übertragungselemente gleichzeitig gegenüber einander bewegen bzw. verdrehen bzw. eines der Übertragungselemente halten bzw. fixieren zu müssen. Insbesondere muss es in diesem Fall nicht erforderlich sein, dass beide Übertragungselemente für die Person zugänglich sind, was die Flexibilität der Ausgestaltung des vom Adaptergehäuse gehaltenen Übertragungselements sowie des Adaptergehäuse selbst erhöhen kann.

Gemäß einem weiteren Aspekt der Erfindung weist das Adaptergehäuse dem Stellantrieb zugewandt eine Aufnahme auf, welche das erste Übertragungselement entlang der Längsachse beweglich und um die Längsachse verdrehsicher aufnimmt, wobei die Aufnahme wenigstens einen Längsschlitz, vorzugsweise wenigstens ein Paar von einander diametral gegenüberliegenden Längsschlitzen, besonders vorzugsweise wenigstens zwei rechtwinkelig zueinander um die Längsachse versetze Paare von einander diametral gegenüberliegenden Längsschlitzen, und das Übertragungselement wenigstens ein Führungselement, vorzugsweise wenigstens ein Paar von einander diametral gegenüberliegenden Führungselementen, besonders vorzugsweise wenigstens zwei rechtwinkelig zueinander um die Längsachse versetze Paare von einander diametral gegenüberliegenden Führungselementen, aufweist, welches radial in den Längsschlitz eingreift, oder umgekehrt. Dies kann eine vergleichsweise einfache, bauraumsparende und bzw. oder verlässliche Möglichkeit darstellen, die zuvor beschriebene Beweglichkeit in Kombination mit der Verdrehsicherheit umzusetzen. Dies kann beispielsweise umgesetzt werden, indem ein radialer Vorsprung des ersten Übertragungselements von der Aufnahme des Adaptergehäuses in der Umfangsrichtung seitlich blockiert wird, sich aber entlang der Längsachse bewegen kann. Dies kann umgekehrt, beispielsweise mittels einer Madenschraube, ebenso umgesetzt werden, indem ein radialer Vorsprung der Aufnahme des Adaptergehäuses radial in eine entsprechende Aussparung bzw. in ein Langloch des ersten Übertragungselements eingreift, welche bzw. welches entlang der Längsachse verläuft.

Gemäß einem weiteren Aspekt der Erfindung weist das Adaptergehäuse wenigstens eine Durchgangsöffnung, vorzugsweise wenigstens ein Paar von einander diametral gegenüberliegenden Durchgangsöffnungen, auf, welche sich vorzugsweise im Wesentlichen, besonders vorzugsweise um ca. 135°, in der Umfangsrichtung erstreckt, und das zweite Übertragungselement weist wenigstens eine radial nach außen zeigende Öffnung auf, welche durch die Durchgangsöffnung des Adaptergehäuses hindurch derart von einem Gegenstand, vorzugsweise von einem Schraubendreher oder von einem Imbusschlüssel, erreicht werden kann, so dass eine Person mittels des Gegenstands das zweite Übertragungselement in der Umfangsrichtung gegenüber dem Adaptergehäuse drehen kann. Hierdurch kann eine Zugriffsmöglichkeit für eine Person wie beispielsweise für einen Monteur auf das zweite Übertragungselement durch das Adaptergehäuse hindurch geschaffen werden, um dieses gegenüber dem ersten Übertragungselement zu bewegen und insbesondere in der Umfangsrichtung zu verdrehen. Dieser Zugriff kann mittels eines Gegenstands, beispielsweise als Schraubendreher oder Inbusschlüssel, durch die Durchgangsöffnung des Adaptergehäuses hindurch erfolgen, sodass das zweite Übertragungselement innerhalb eines Innenraums des Adaptergehäuses aufgenommen, geführt und bewegt, insbesondere verdreht, werden kann.

Sind die beiden Übertragungselemente dabei mittels Gewinden gegenüber einander verdrehbar ausgebildet, wie zuvor beschrieben, so kann es entsprechend vorteilhaft sein, die Durchgangsöffnung des Adaptergehäuses im Wesentlichen in der Umfangsrichtung, sozusagen schlitzartig und ausreichend hoch entlang der Längsachse für das zu verwendende Werkzeug, auszubilden, um mit der jeweiligen Benutzung des Werkzeugs eine möglichst lange Drehbewegung in der Umfangsrichtung erzeugen zu können.

In jedem Fall ist dabei die Durchgangsöffnung des Adaptergehäuses entlang der Längsachse ausreichend lang auszubilden, um die gewünschte Bewegung des zweiten Übertragungselements entlang der Längsachse bewirken zu können, insbesondere, falls dies keine Dreh- bzw. Schraubbewegung ist.

Gemäß einem weiteren Aspekt der Erfindung kann die resultierende gemeinsame Länge von erstem Übertragungselement und zweitem Übertragungselement entlang der Längsachse, zumindest in einem vorbestimmten Maße, fixiert werden. Mit anderen Worten kann die gewünschte resultierende gemeinsame Länge eingestellt und dann beibehalten werden, um den Stellantrieb dauerhaft wie eingestellt mit dem Stellventil zusammenwirken zu lassen. Dies kann je nach verwendetem mechanischem Wirkprinzip der Längenveränderbarkeit der beiden Übertragungselemente durch geeignete mechanische Mittel erfolgen, beispielsweise durch Klemmen, Rasten, Verspannen und dergleichen. In jedem Fall kann hierdurch sichergestellt werden, dass das eingestellte gewünschte Schließmaß durch die wechselnden Kraftwirkungen zwischen Stellantrieb und Stellventil nicht verändert und hierdurch der Betrieb der entsprechenden Anlage nicht beeinträchtigt werden kann.

Gemäß einem weiteren Aspekt der Erfindung weist der Adapter wenigstens ein Sicherungselement auf, welches ausgebildet ist, mittels wenigstens eines radialen Vorsprungs durch die Durchgangsöffnung des Adaptergehäuses hindurch in eine von mehreren radial nach außen zeigenden Öffnungen des zweiten Übertragungselements einzugreifen, vorzugsweise in der Öffnung des zweiten Übertragungselements gehalten zu werden. Die Öffnungen können als Durchgangsöffnungen oder als Einbuchtungen des zweiten Übertragungselements ausgebildet sein. In jedem Fall können die Öffnungen derart versetzt zueinander angeordnet sein, dass durch die Verwendung des Sicherungselements unterschiedliche resultierende Längen fixiert werden können. Somit kann das zuvor beschriebene Fixieren der beiden Übertragungselemente in der gewünschten Länge zueinander dadurch erreicht werden, indem die Beweglichkeit und insbesondere die Verdrehbarkeit um die Längsachse ausreichend reduziert wird. Hierzu kann das Sicherungselement zum einen mit dem zweiten Übertragungselement feststehend verbunden und zum anderen innerhalb der Durchgangsöffnung des Adaptergehäuses angeordnet werden, wodurch ein Formschluss bewirkt werden kann.

Je nach Ausgestaltung des Sicherungselements bzw. dessen Sicherungskörpers und der Durchgangsöffnung des Adaptergehäuses zueinander kann die relative Beweglichkeit zueinander auf ein ausreichend geringes Maß reduziert werden, welches dennoch die eingestellte resultierenden Länge der Übertragungselemente ausreichend gewährleisten kann. Gegebenenfalls kann die relative Beweglichkeit durch eine entsprechende Ausgestaltung auch vollständig unterbunden werden.

Gemäß einem weiteren Aspekt der Erfindung erstreckt sich ein Sicherungskörper des Sicherungselements in der Umfangsrichtung soweit wie die Durchgangsöffnung des Adaptergehäuses und ist ausgebildet, innerhalb der Durchgangsöffnung des Adaptergehäuses angeordnet zu werden. Mit anderen Worten entspricht die Größe des Sicherungskörpers des Sicherungselements der Größe der Durchgangsöffnung des Adaptergehäuses, sodass hierdurch ein formschlüssiger feststehender Halt des Sicherungselements in der Durchgangsöffnung des Adaptergehäuses in der Ebene des Adaptergehäuses erreicht werden kann. Hierdurch kann das zweite Übertragungselement ebenfalls feststehend fixiert werden.

Gemäß einem weiteren Aspekt der Erfindung weist das zweite Übertragungselement eine Mehrzahl von Öffnungen auf, welche in der Umfangsrichtung, vorzugsweise gleichmäßig zueinander beabstandet, angeordnet sind. Hierdurch können die beiden Übertragungselemente gegenüber einander verdreht und in gewissen Drehstellungen, welche durch die Öffnungen des zweiten Übertragungselements vorgegeben werden, gehalten werden, wodurch die resultierende Länge der beiden Übertragungselemente entlang der Längsachse in vergleichsweise feinen Stufen diskret eingestellt werden kann.

Gemäß einem weiteren Aspekt der Erfindung weist das Sicherungselement wenigstens zwei radiale Vorsprünge auf, welche in der Umfangsrichtung zueinander beabstandet sind, wobei das zweite Übertragungselement wenigstens zwei Öffnungen, vorzugsweise mehr als zwei Öffnungen, aufweist, welche in der Umfangsrichtung korrespondierend zu den radialen Vorsprüngen des Sicherungselements zueinander beabstandet sind. Dies kann den Halt des Sicherungselements in dem zweiten Übertragungselement verbessern.

Gemäß einem weiteren Aspekt der Erfindung weist der radiale Vorsprung des Sicherungselements wenigstens einen entlang der Längsachse federelastischen Raststeg mit wenigstens einem Rasthaken auf, welcher ausgebildet ist, die Öffnung des zweiten Übertragungselements radial zu hintergreifen. Dies kann eine vergleichsweise einfache und sichere Möglichkeit darstellen, das Sicherungselement in der Öffnung des zweiten Übertragungselements wenigstens formschlüssig und vorzugsweise ferner kraftschlüssig zu halten.

Gemäß einem weiteren Aspekt der Erfindung bildet das Adaptergehäuse zwischen dem Anschluss für das Stellventil und dem Anschluss für den Stellantrieb einen Innenraum aus, in welchem das erste Übertragungselement und bzw. oder das zweite Übertragungselement angeordnet ist bzw. sind, wobei der Innenraum entlang der Längsachse zum Stellventil hin zur Durchführung des ersten Übertragungselements und bzw. oder zum Stellantrieb hin zur Durchführung des zweiten Übertragungselements zumindest abschnittsweise offen ausgebildet ist. Hierdurch kann eines der beiden Übertragungselemente oder können beide Übertragungselemente vom umgebenden Adaptergehäuse gegenüber der Umgebung geschützt werden. Auch kann dies die Handhabung des Adapters vereinfachen, da eine Person wie beispielsweise ein Monteur lediglich das Adaptergehäuse greifen bzw. halten muss. Auch können die Übertragungselemente vom Adaptergehäuse derart gehalten werden, dass die beiden Übertragungselemente wie zuvor beschrieben miteinander sowie mit dem Adaptergehäuse zusammenwirken können. Es kann auch ein Übertragungselement innerhalb des Innenraums und das andere Übertragungselement außerhalb des Innenraums angeordnet sein und beide verbundenen Übertragungselemente können dann durch eine dazwischenliegende Wand oder dergleichen des Adaptergehäuses am Adaptergehäuse gehalten werden.

Gemäß einem weiteren Aspekt der Erfindung sind das erste Übertragungselement und das zweite Übertragungselement jeweils sich zumindest abschnittsweise derart radial erstreckend ausgebildet, um von dem Adaptergehäuse innerhalb des Innenraums formschlüssig gehalten zu werden. Dies kann es ermöglichen, dass die beiden Übertragungselemente voneinander sowie vom Adaptergehäuse gehalten werden, sodass die Übertragungselemente sich nicht vom Adaptergehäuse lösen und verloren gehen können. Auch kann dies der Person wie beispielsweise ein Monteur die Montage bzw. die Verwendung des Adapters, insbesondere mit einer Hand, erleichtern.

Die vorliegende Erfindung betrifft auch einen Fluidverteiler mit wenigstens einem Stellventil mit einem Adapter wie zuvor beschrieben und mit einem Stellantrieb, welcher von dem Adapter an dem Stellventil gehalten wird. Ein derartiger Fluidverteiler kann insbesondere ein Heizkreisverteiler einer Fußbodenheizung einer Warmwasserheizungsanlage oder ein Heizkörper bzw. ein Radiator einer Warmwasserheizungsanlage sein. Hierdurch kann ein Fluidverteiler geschaffen werden, um die zuvor genannten Eigenschaften und Vorteile des erfindungsgemäßen Adapters umsetzen und nutzen zu können.

Die vorliegende Erfindung betrifft auch ein Verfahren zum Verbinden eines Stellantriebs mit einem Stellventil mittels eines Adapters wie zuvor beschrieben mit wenigstens den Schritten:
- Befestigen eines Anschlusses eines Adaptergehäuses des Adapters entlang einer Längsachse an dem Stellventil,
- Befestigen des Stellantriebs auf einem Anschluss des Adaptergehäuses des Adapters entlang der Längsachse, und
- Bewegen des ersten Übertragungselements und des zweiten Übertragungselements gegenüber einander entlang der Längsachse derart, so dass eine resultierende gemeinsame Länge vom ersten Übertragungselement und vom zweiten Übertragungselement entlang der Längsachse derart eingestellt wird, dass das erste Übertragungselement und das zweite Übertragungselement direkt oder indirekt entlang der Längsachse mit einem Stellelement des Stellantriebs und mit einem Ventilstößel des Stellventils in Kontakt kommen,
- wobei vorzugsweise vor dem Befestigen an dem Stellventil ein Einstellen einer geringeren gemeinsamen Länge als der Abstand zwischen Stellelement des Stellantriebs und Ventilstößel des Stellventils, vorzugsweise ein Einstellen einer minimalen gemeinsamen Länge, erfolgt, und bzw. oder
- wobei vorzugsweise nach dem Bewegen des ersten Übertragungselements und des zweiten Übertragungselements ein Fixieren, vorzugsweise mittels eines Sicherungselements, der resultierenden gemeinsamen Länge von erstem Übertragungselement und zweitem Übertragungselement entlang der Längsachse, zumindest in einem vorbestimmten Maße, erfolgt.

Dies kann es einer Person wie beispielsweise einem Monteur oder einem Installateur ermöglichen, den erfindungsgemäßen Adapter zum Verbinden eines Stellantriebs mit einem Stellventil zu verwenden und hierdurch dessen Eigenschaften und Vorteile umzusetzen.

Mit anderen Worten kann es erfindungsgemäß ermöglicht werden, mit dem hier beschriebenen verstellbaren Adapter ein beliebiges Stellelement, vorzugsweise mit Hubanzeige, an ein vorhandenes Ventil anzupassen.

Der verstellbare Adapter kann eine Hülse mit jeweils zum Ventil und zum Stellelement passendem Gewinde, einen Stößel und einen Einstellring aufweisen. Zusätzlich kann es optional eine Verdrehsicherung geben. Die Hülse kann zur Verbindung des Stellelementes mit dem vorhandenen Ventil und zur Aufnahme des Stößels und Einstellringes dienen. Der Stößel kann in der Hülse zentrisch, verdrehsicher, z.B. durch eine Madenschraube gesichert, und in axialer Richtung verschiebbar gelagert sein. Der Einstellring kann ebenfalls zentrisch, in axialer Richtung verschiebbar und zusätzlich um seine Längsachse drehbar in der Hülse gelagert sein. Außerdem kann der Einstellring mittels eines Gewindes mit dem Stößel so verbunden sein, das sich der Abstand zwischen Stößel und Einstellring verändern lässt. Der Einstellring kann an seinem Umfang mehrere Öffnungen, Durchgangsöffnungen bzw. Einbuchtungen aufweisen, in die ein handelsübliches stiftförmiges Werkzeug wie z.B. die Spitze eines Schraubendrehers oder Inbusschlüssels eingeführt werden kann, um damit den Einstellring um seine Längsachse zu drehen. In der Hülse können entsprechende Öffnungen vorhanden sein. Die Verdrehsicherung kann im montierten Zustand das Verdrehen des Einstellrings sichern bzw. verhindern. Die Verdrehsicherung kann z.B. als Clip ausgeführt sein, der in eine Öffnung der Hülse eingeclipst werden kann und dann in z.B. eine Einbuchtung des Einstellrings hineinragt.

Der verstellbare Adapter kann mit kleinsten zwischen Stößel und Einstellring einstellbarem Abstandsmaß auf das Ventil montiert werden. Dann kann das Stellelement auf dem Adapter montiert werden. Am Einstellring kann dann durch Drehen des Einstellrings das Abstandsmaß zwischen Stößel und Einstellring so verändert werden, bis das Ventil sicher geschlossen ist. Bei Stellelementen mit Hubanzeige kann dieser Zustand leicht zu erkennen sein. Bei Stellelementen ohne Hubanzeige kann an in den meisten Anlagen verbauten Durchflussmessern der Schließvorgang abgelesen werden. Nachdem der Adapter eingestellt wurde, kann die Verdrehsicherung montiert werden. Diese kann im Betrieb des Stellelements eine unabsichtliche Abstandsänderung zwischen Stößel und Einstellring verhindern.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine schematische Schnittdarstellung eines Stellventils eines Heizkreisverteilers gemäß dem Stand der Technik;
- Figur 2: eine schematische perspektivische Darstellung eines zweiten Übertragungselements eines erfindungsgemäßen Adapters von schräg oben;
- Figur 3: eine schematische perspektivische Darstellung eines ersten Übertragungselements des erfindungsgemäßen Adapters von schräg oben;
- Figur 4: eine schematische perspektivische Darstellung eines Adaptergehäuses des erfindungsgemäßen Adapters von schräg oben;
- Figur 5: eine schematische perspektivische Darstellung des Adapters mit Adaptergehäuse, erstem Übertragungselement und zweitem Übertragungselement von schräg oben;
- Figur 6: eine schematische perspektivische Darstellung eines Sicherungselements des erfindungsgemäßen Adapters von schräg oben;
- Figur 7: eine schematische Darstellung eines Längsschnitts durch den erfindungsgemäßen Adapter mit Adaptergehäuse, erstem Übertragungselement und zweitem Übertragungselement;
- Figur 8: die Darstellung der Figur 7 mit eingesetztem Sicherungselement;
- Figur 9: eine schematische perspektivische Darstellung des Stellventils der Figur 1 mit erfindungsgemäßem Adapter mit Adaptergehäuse, erstem Übertragungselement und zweitem Übertragungselement sowie mit Stellantrieb;
- Figur 10: eine schematische Darstellung eines Längsschnitts durch den unteren Bereich der Figur 9 in einer kontaktlosen Stellung;
- Figur 11: die Darstellung der Figur 10 in einer kontaktierenden Stellung; und

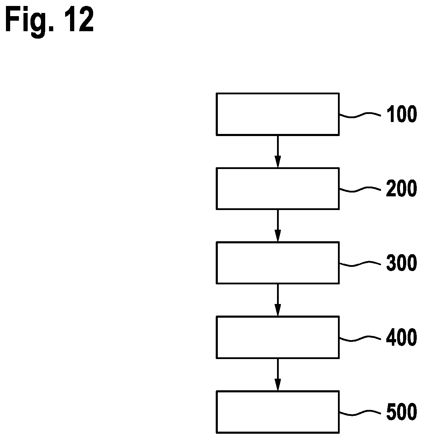

- Figur 12: ein Ablaufdiagramm eines erfindungsgemäßen Verfahrens zum Verbinden des Stellantriebs mit dem Stellventil mittels des erfindungsgemäßen Adapters.

Die o.g. Figuren werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung U.

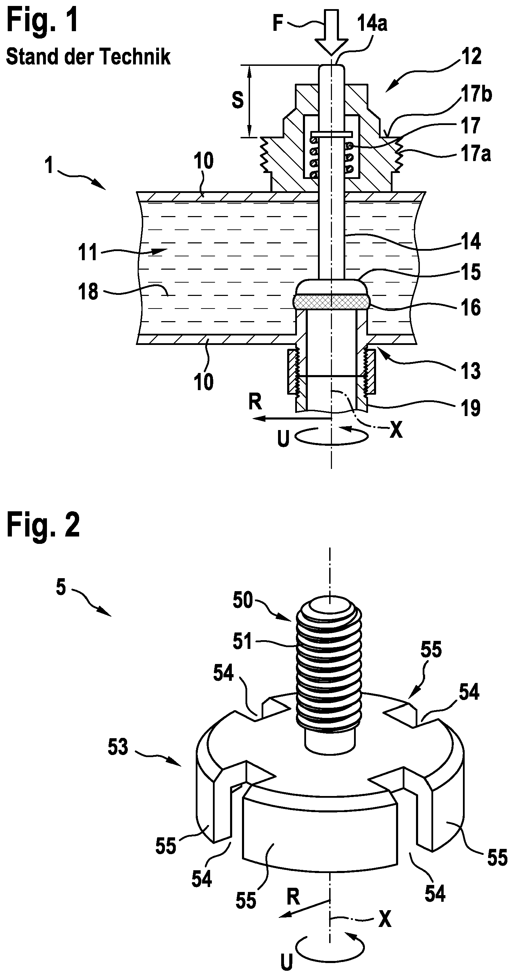

Figur 1 zeigt einen Fluidverteiler 1 in Form eines Heizkreisverteilers 1 einer Heizungsanlage. Der Heizkreisverteiler 1 weist eine Wandung 10 auf, welche einen Innenraum 11 als Innenvolumen 11 umschließt. Innerhalb des Innenraums 11 befindet sich ein Fluid 18 in Form von Heizungswasser 18.

Der Heizkreisverteiler 1 weist mehrere Stellventile 12 auf, welche nebeneinander angeordnet sind und von denen lediglich ein Stellventil 12 in der Figur 1 dargestellt ist. Das Stellventil 12 weist einen Leitungsanschluss 13 auf, welcher in der Darstellung der Figur 1 nach unten hin durch die Wandung 10 des Heizkreisverteilers 1 hindurchführt. Am unteren bzw. äußeren Ende des Leitungsanschlusses 13 ist eine Fluidleitung 19 in Form eines Rohrs 19 angeschlossen. Das Stellventil 12 weist einen Ventilstößel 14 in Form eines zylindrischen Stabes auf, welcher durch das Heizungswasser 18 hindurchgeführt wird und sich an seinem unteren, dem Leitungsanschluss 13 zugewandten Ende zu einem kreisrunden Ventilteller 15 radial aufweitet. Dem Leitungsanschluss 13 zugewandt weist der Ventilteller 15 randseitig eine ringförmige Ventildichtung 16 aus einem elastischen Material auf.

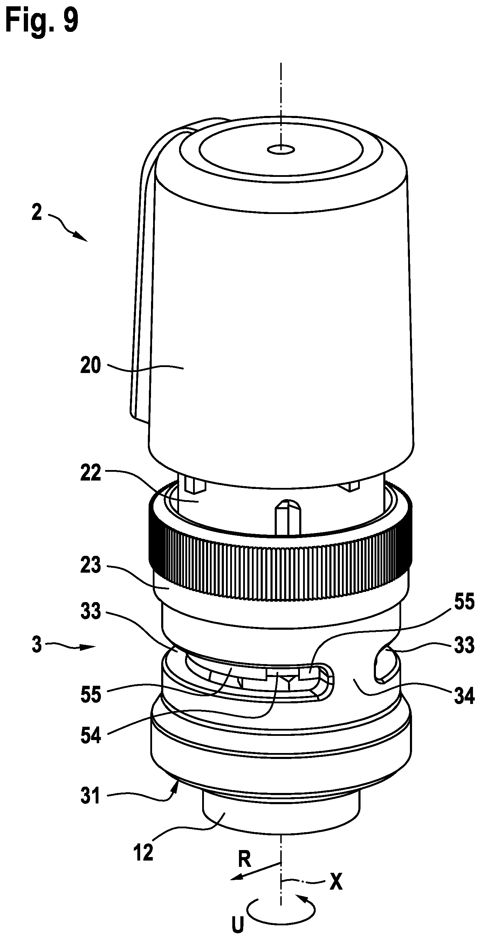

Außerhalb der Wandung 10 des Heizkreisverteilers 1 ist das Stellventil 12 derart von außen auf der Wandung 10 feststehend angeordnet, dass sich der Ventilstößel 14 entlang der Längsachse X durch das Stellventil 12 hindurch und mit seiner Oberkante 14a nach oben aus dem Stellventil 12 heraus erstreckt. Innerhalb des Stellventils 12 ist eine Rückstellfeder 17 als Ventilfeder 17 angeordnet und derart mit dem Stellventil 12 und dem Ventilstößel 14 verbunden, dass der Ventilstößel 14 entlang der Längsachse X von der Federkraft F der Rückstellfeder 17 vom Leitungsanschluss 13 weg bewegt werden und der Leitungsanschlusses 13 somit fluidführend geöffnet werden kann. Wird seitens einer Druckfeder (nicht dargestellt) eines Stellantriebs 2, vgl. zum Beispiel Figur 9, eine höhere Federkraft entlang der Längsachse X über die Oberkante 14a auf den Ventilstößel 14 aufgebracht und der Ventilstößel 14 vollständig auf dem Leitungsanschluss 13 gedrückt, sodass der Ventilteller 15 mit der Ventildichtung 16 den Leitungsanschluss 13 fluiddicht abdichtet, wie in der Figur 1 dargestellt, so kann hierdurch ein Fließen des Heizungswassers 18 in das Rohr 19 vollständig unterbunden werden.

Um nun einen Stellantrieb 2 zur Betätigung des Stellventils 12 derart verwenden zu können, dass der Stellantrieb 2 mittels der Federkraft seiner Druckfeder den Ventilstößel 14 wie zuvor beschrieben vollständig fluiddicht auf den Leitungsanschlusses 13 drücken kann, muss das Schließmaß S des Stellventils 12 bekannt sein, welches im vollständig geschlossenen Zustand der Figur 1 dem Abstand entlang der Längsachse X zwischen der Oberkante 14a des Ventilstößels 14 der Stellventils 12 und einer Auflagefläche 17b eines Anschlussgewinde 17a der Stellventils 12 entspricht. Dies ist jedoch üblicherweise für die jeweilige Kombination von Stellantrieb 2 und Stellventil 12 nicht bekannt und kann für Bestandsanlagen mit verbautem Stellventil 12 auch nicht messtechnisch ermittelt werden. Schätzungen des Schließmaßes S sind üblicherweise zu ungenau, um eine korrekte bzw. optimale Betätigung des Stellventils 12 durch den Stellantrieb 2 zu gewährleisten.

Erfindungsgemäß ist daher ein Adapter 3-6 vorgesehen, welche auch als Adaptervorrichtung 3-6 bezeichnet werden kann. Mittels des erfindungsgemäßen Adapters 3-6 kann nicht nur ein Stellantrieb 2 an verschiedene Stellventile 12 angepasst bzw. dort montiert werden. Ferner kann mittels des erfindungsgemäßen Adapters 3-6 das jeweils passende Schließmaß S eingestellt werden, ohne dass dieses bekannt sein oder ermittelt werden muss.

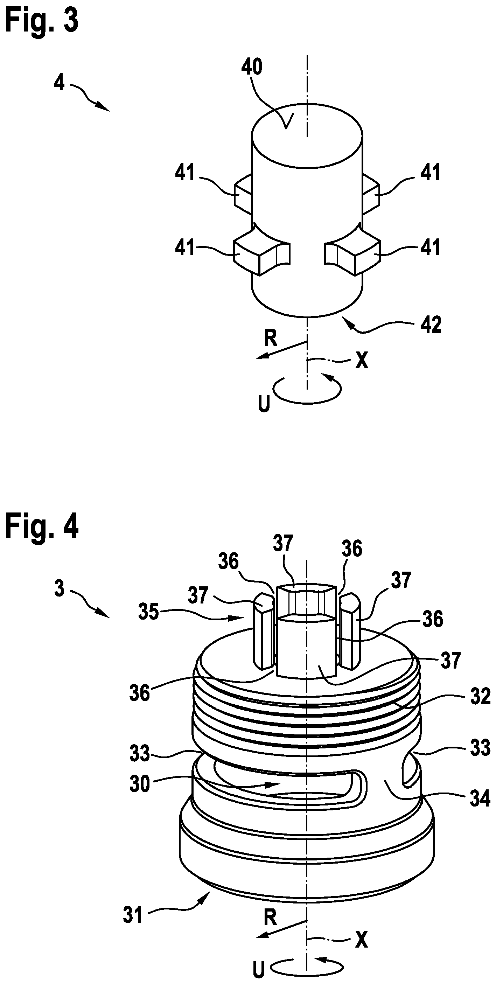

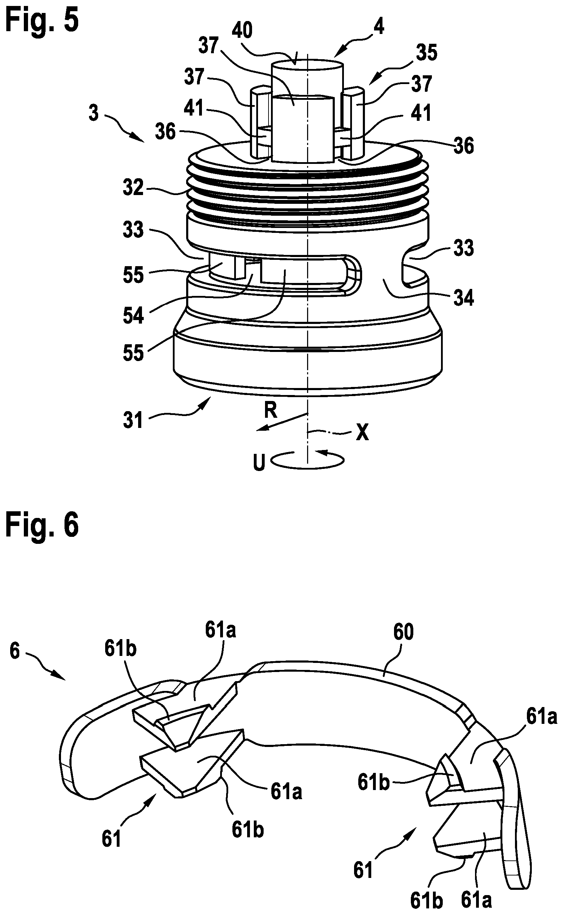

Der erfindungsgemäße Adapter 3-6 weist ein Adaptergehäuse 3 auf, siehe zum Beispiel Figur 4, welches auch als Adapterhülse 3 bezeichnet werden kann. Das Adaptergehäuse 3 ist einstückig, d. h. integral, als Spritzgussteil ausgeführt und weist eine im Wesentlichen zylindrische Form um die Längsachse X herum auf. Das Adaptergehäuse 3 umschließt einen im wesentlichen zylindrischen Innenraum 30, welcher ein zweites Übertragungselement 5, siehe zum Beispiel Figur 2, aufnimmt. Das zweite Übertragungselement 5 ist durch das Adaptergehäuse 3 hindurch mit einem ersten Übertragungselement 4, siehe zum Beispiel Figur 3, verbunden, welches außerhalb des Innenraums 30 des Adaptergehäuses 3 angeordnet ist, siehe zum Beispiel Figuren 5, 7 und 8.

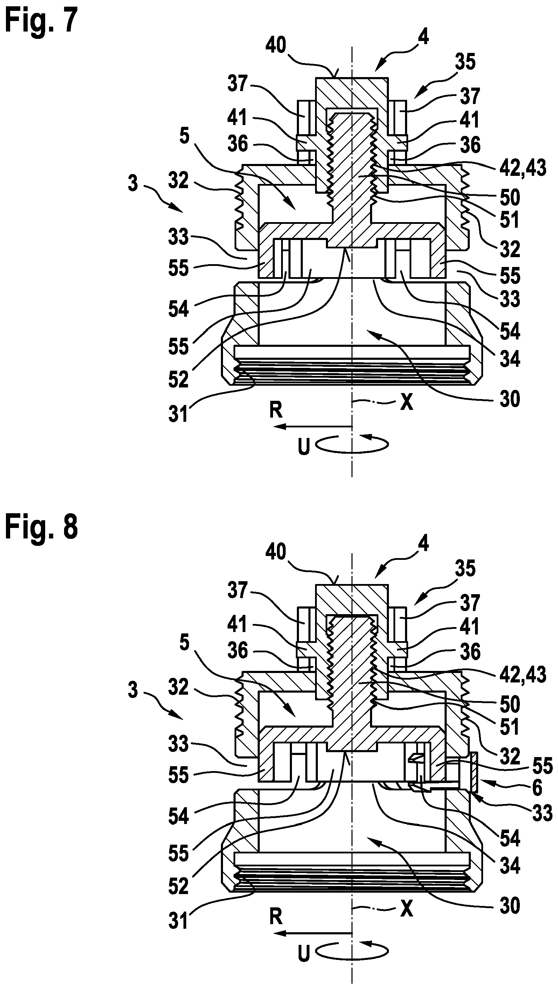

Das Adaptergehäuse 3 bzw. dessen zylindrische Wandung (nicht bezeichnet) ist entlang der Längsachse X nach unten hin kreisförmig vollständig offen ausgebildet, wobei der Rand (nicht bezeichnet) der Wandung innenseitig einen Anschluss 31 in Form eines Gewindes 31 als Innengewinde 31 aufweist, siehe zum Beispiel Figuren 7 und 8, welches korrespondierend zum Anschlussgewinde 17a des Stellventils 12 ausgebildet ist. Dabei kann das Adaptergehäuse 3 durch unterschiedliche Ausgestaltungen des unteren Rands seiner Wandung und seines Innengewindes 31 an unterschiedliche Stellventile 12 angepasst und mit diesen durch Aufschrauben verbunden werden.

Entlang der Längsachse X gegenüberliegend weist das Adaptergehäuse 3 bzw. dessen zylindrische Wandung am oberen Rand (nicht bezeichnet) einen Anschluss 32 in Form eines Gewindes 32 als Außengewinde 32 auf, siehe zum Beispiel ebenfalls Figuren 7 und 8, um dort ein Anschlussgewinde 24 als Außengewinde 24 des Stellantriebs 2 aufzunehmen, siehe zum Beispiel Figur 9. Dabei kann das Adaptergehäuse 3 durch unterschiedliche Ausgestaltungen des oberen Rands seiner Wandung und seines Außengewindes an unterschiedliche Stellantriebe 2 angepasst werden, um diese durch Aufschrauben aufzunehmen. Insbesondere können auf diese Art und Weise unterschiedliche Adapter 3-6 bzw. Adaptergehäuse 3 geschaffen werden, um eine vorbestimmte Ausgestaltung eines Stellantriebs 2 an unterschiedliche Stellventile 12 anpassen zu können.

Das Adaptergehäuse 3 weist entlang der Längsachse X etwa mittig zwischen seinem unteren Rand und seinem oberen Rand ein Paar von schlitzartigen Durchgangsöffnungen 33 auf, welche sich in der Umfangsrichtung U etwa über 135° erstrecken und einander radial gegenüberliegen. Die beiden Durchgangsöffnungen 33 sind durch zwei Längsstegen 34 unterbrochen, welche den unteren Rand und den oberen Rand des Adaptergehäuses 3 entlang der Längsachse X miteinander verbinden. Die beiden Durchgangsöffnungen 33 sind in der Umfangsrichtung U gleich breit ausgebildet und liegen einander ebenfalls radial gegenüber, siehe zum Beispiel Figur 4.

Das Adaptergehäuse 3 ist innerhalb seines oberen Randes im Wesentlichen kreisförmig geschlossen ausgebildet, sodass der Innenraum 30 entlang der Längsachse X am oberen Rand des Adaptergehäuses 3 begrenzt und im Wesentlichen geschlossen wird, bis auf eine kreisrunde mittige Durchgangsöffnung (nicht bezeichnet). Entlang der Längsachse X oberhalb der Durchgangsöffnung werden vier bogenförmige Längsstegen 37 von dem Adaptergehäuse 3 in der Umfangsrichtung U gleichmäßig angeordnet ausgebildet, welche sich sowohl entlang der Längsachse X als auch abschnittsweise in der Umfangsrichtung U erstrecken und gemeinsam eine zylindrische Form ausbilden, welche von vier Längsschlitzen 36 unterbrochen wird, siehe zum Beispiel Figur 4. Die Längsstegen 37 und die Längsschlitze 36 bilden gemeinsam eine Aufnahme 35 des Adaptergehäuses 3 für das bereits erwähnte erste Übertragungselement 4.

Das erste Übertragungselement 4 ist im Wesentlichen als zylindrischer Körper einstückig ausgebildet, welcher etwa mittig entlang der Längsachse X vier Führungselemente 41 aufweist, welche jeweils stegartig radial nach außen ragen und in der Umfangsrichtung U gleichmäßig zueinander beabstandet sind, siehe zum Beispiel Figur 3. Die Führungselemente 41 des ersten Übertragungselements 4 sind korrespondierend zu den Längsschlitzen 36 der Aufnahme 35 des Adaptergehäuses 3 ausgebildet, sodass das erste Übertragungselement 4 von der Aufnahme 35 des Adaptergehäuses 3 entlang der Längsachse X in einem gewissen Maß beweglich geführt aber gleichzeitig in der Umfangsrichtung U verdrehsicher aufgenommen werden kann, siehe zum Beispiel Figur 5.

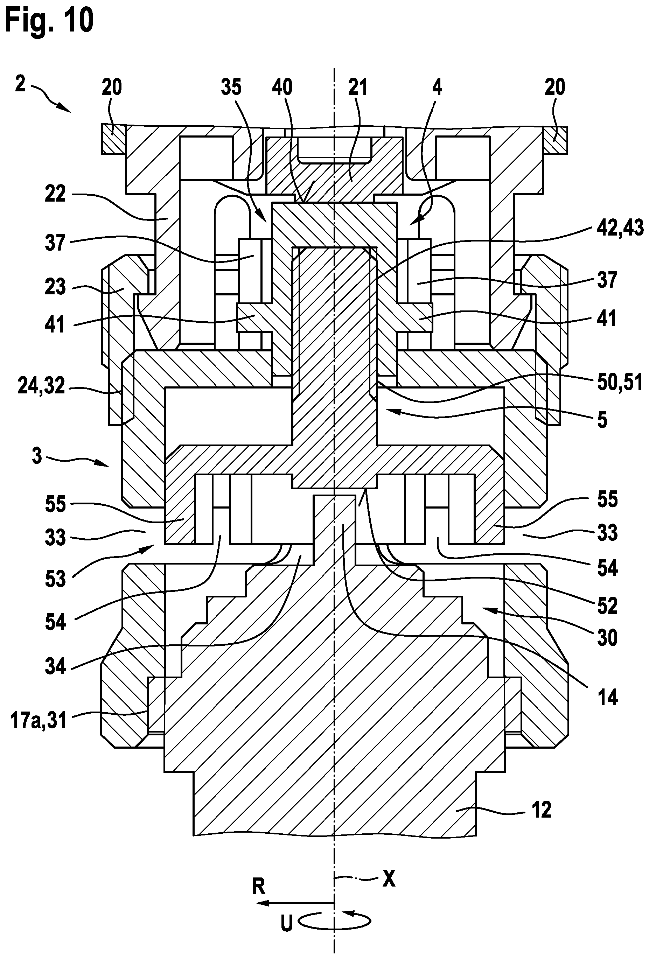

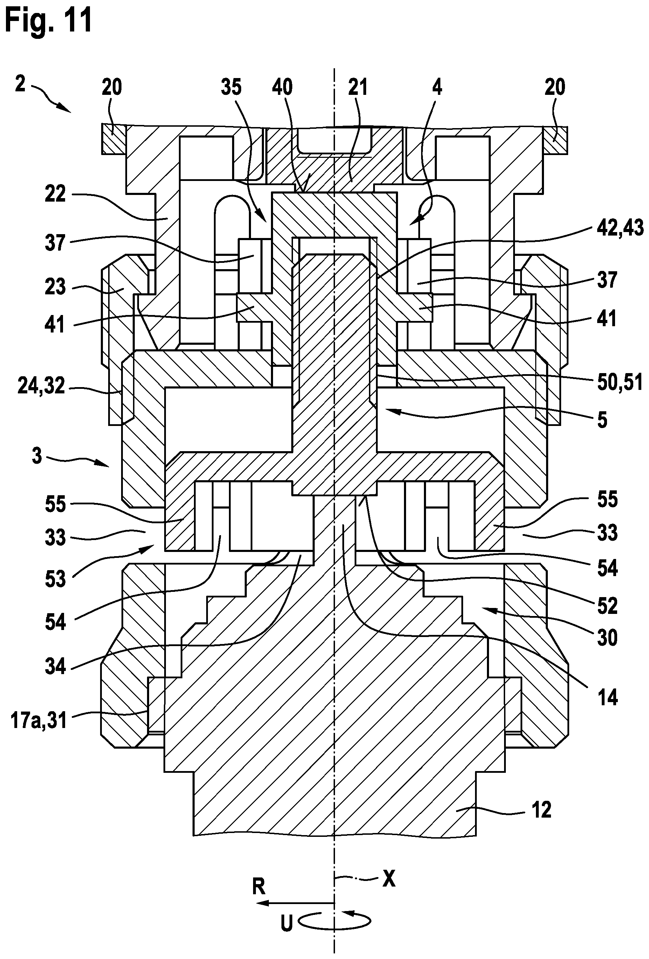

Entlang der Längsachse X oben schließt das erste Übertragungselement 4 mit einer kreisförmigen Fläche ab, welche ein Kontaktelement 40 bzw. eine Kontaktfläche 40 des ersten Übertragungselements darstellt, siehe zum Beispiel Figuren 4, 7 und 8, und dazu ausgebildet ist, von einem Stellelement 21 des Stellantriebs 2, welcher mit dem Adaptergehäuse 3 verschraubt ist, kontaktiert zu werden, siehe zum Beispiel Figuren 10 und 11. Entlang der Längsachse X gegenüberliegend weist das erste Kontaktelement 4 eine von unten zugängliche Aufnahme 42 mit einem Gewinde 43 als Innengewinde 43 auf, siehe zum Beispiel Figuren 7 und 8.

Das bereits erwähnte zweite Übertragungselement 5 ist entlang der Längsachse X in seinem oberen Bereich als zylindrisches Abstandselement 50 mit einem Gewinde 51 als Außengewinde 51 ausgebildet, siehe zum Beispiel Figuren 2, 7 und 8. Entlang der Längsachse X schließt sich an das Abstandselement 50 einstückig ein Bedienelement 53 als Bedienring 53 an, welcher sich zunächst radial flächig bzw. tellerförmig erstreckt und dann entlang der Längsachse X nach unten hin zeigt und dort im Wesentlichen zylindrisch ausgebildet ist, siehe zum Beispiel Figuren 2, 7 und 8. Der zylindrische untere Rand (nicht bezeichnet) des Bedienrings 53 weist vier Öffnungen 54 auf, welche als Durchgangsöffnungen 54 ausgebildet sind, jedoch auch Einbuchtungen (nicht dargestellt) sein könnten. Die Durchgangsöffnungen 54 erstrecken sich bis in den tellerförmigen Bereich hinein und sind jeweils gleich ausgebildet sowie gleich zueinander in der Umfangsrichtung U beabstandet. Die massiven Bereiche des zweiten Übertragungselements 5 zwischen den Durchgangsöffnungen 54 des Bedienrings 53 können als Längsstege 55 bezeichnet werden.

Innerhalb des Bedienring 53 ist dem Abstandselement 50 entlang der Längsachse X nach unten zeigend gegenüberliegend ein Kontaktelement 52 bzw. eine Kontaktfläche 52 mit einer kreisförmigen Fläche ausgebildet, siehe zum Beispiel Figuren 7 und 8. Die Kontaktfläche 52 des zweiten Übertragungselements 5 ist dazu ausgebildet, den Ventilstößel 14 des Stellventils 2 zu kontaktieren, wenn der Adapter 3-6 auf das Stellventile 12 aufgeschraubt und das richtige Schließmaß S eingestellt ist, siehe zum Beispiel Figur 11.

Der erfindungsgemäße Adapter 3-6 umfasst ferner ein Sicherungselement 6 als Verdrehsicherung 6, welche als einstückiger Sicherungskörper 60 als Spritzgussteil in der Umfangsrichtung U bogenförmig ausgebildet ist und sich hierbei etwa um 135° erstreckt. Die Kontur des Sicherungskörpers 60 entspricht dabei passgenau den Durchgangsöffnungen 33 des Adaptergehäuses 3. Der Sicherungskörper 60 weist in der Umfangsrichtung U im Bereich vor seinen offenen Enden (nicht bezeichnet) jeweils ein Paar von radialen Vorsprüngen als Rastelemente 61 auf, welche jeweils ein Paar radial nach innen zeigender Raststege 61a mit entlang der Längsachse X nach außen zeigenden Rasthaken 61b aufweisen, siehe zum Beispiel Figur 6.

Der erfindungsgemäße Adapter 3-6 wird nun derart werksseitig vormontiert, dass entlang der Längsachse X von oben das erste Übertragungselement 4 mit der Aufnahme 42 voran in die entsprechende Durchgangsöffnung des Adaptergehäuses 3 eingesetzt wird, so dass die Führungselemente 41 des ersten Übertragungselements in die Längsschlitze 36 der Aufnahme 35 des Adaptergehäuses 3 eingeführt werden. Nun wird entlang der X-Achse entgegengesetzt von unten das zweite Übertragungselement 5 in den Innenraum 30 des Adaptergehäuses 3 eingeführt und mit dem Außengewinde 51 des Abstandselements 50 des zweiten Übertragungselement 5 in das Innengewinde 43 der Aufnahme 42 des ersten Übertragungselements 4 bis zum Anschlag eingeschraubt, siehe zum Beispiel Figur 7. Dies kann als ein Einstellen 100 einer minimalen gemeinsamen Länge der beiden Übertragungselemente 4, 5 angesehen werden. Der vormontierten Adapter 3-6 kann nun samt Sicherungselement 6 bereitgestellt werden, um verwendet zu werden.

Am Einsatzort eines erfindungsgemäßen Adapters 3-6 wie beispielsweise bei einem Heizkreisverteiler, bei dem ein Stellantriebs 2 ersetzt werden muss, kann eine Person wie beispielsweise ein Monteur nach Entfernen des zu ersetzenden Stellantriebs 2 ein Adaptergehäuse 3 mit einem unteren Rand und mit einem Innengewinde 31, welche zum Anschlussgewinde 17a des Stellventils 12 passen, verwenden und durch vollständiges Aufschrauben als ein Befestigen 200 entlang der Längsachse X an dem Stellventil 12 befestigen, siehe zum Beispiel Figur 9.

Nun kann der Monteur den zum Adaptergehäuse 3 passenden Stellantrieb 2 entlang der Längsachse X auf das Adaptergehäuse 3 vollständig aufschrauben, was als Befestigen 300 des Stellantriebs 2 angesehen werden kann. Der Stellantrieb 2 kann durch ein Gehäuse 20 umschlossen werden und entlang der Längsachse X in seinem unteren Bereich eine Halterung 22 mit einem Haltering 23 mit einem Anschlussgewinde 24 als Innengewinde 24 aufweisen, welches korrespondierend zum Außengewinde 32 des Adaptergehäuses 3 ausgebildet ist. Auf diese Weise kann der Stellantrieb 2 mittels des Adaptergehäuses 3 sicher feststehend an dem Stellventil 12 gehalten werden. Gleichzeitig kann durch die Verwendung unterschiedlicher Adaptergehäuse 3 ein und derselbe Stellantrieb 2 an unterschiedliche Stellventile 12 angepasst werden.

Die beiden Übertragungselemente 4, 5 sind aufgrund der Längen der Aufnahme 42 des ersten Übertragungselements und des Abstandselements 50 des zweiten Übertragungselements 5 entlang der Längsachse X sowie der jeweiligen Gewinde 43, 51 in einem gewissen Maße gegenüber einander verdrehbar, ohne von einander gelöst zu werden. Hierdurch kann die resultierende Länge entlang der Längsachse X der beiden Übertragungselemente zusammen und damit auch der Abstand entlang der Längsachse X zwischen der Kontaktfläche 40 des ersten Übertragungselements 4 und der Kontaktfläche 52 des zweiten Übertragungselements 5 in diesem Maße von beispielsweise ca. 10 bis 20 Millimetern verändert werden. Da das erste Übertragungselement 4 von der Aufnahme 35 des Adaptergehäuses 3 verdrehsicher aber gleichzeitig entlang der Längsachse X beweglich bzw. verschiebbar gehalten wird, kann durch ein Verdrehen des zweiten Übertragungselements 5 gegenüber dem ersten Übertragungselement 4 das erste Übertragungselement 4 entlang der Längsachse X verschoben sowie das zweite Übertragungselement 5 in die Aufnahme 42 des ersten Übertragungselements 4 eingeschraubt bzw. eingefahren sowie in die entgegengesetzte Drehrichtung ausgeschraubt bzw. ausgefahren werden.

Entsprechend können der Ventilstößel 14 der Stellventils 12 und der Stellelement 21 des Stellantriebs 2, welche an sich durch das Adaptergehäuse 3 entlang der Längsachse X beabstandet sind, mittels der beiden Übertragungselemente 4, 5 in einen kraftübertragenden Kontakt gebracht werden, indem das zweite Übertragungselement 5 solange aus dem ersten Übertragungselement 4 ausgeschraubt wird, bis die Kontaktfläche 40 des ersten Übertragungselements 4 das Stellelement 21 des Stellantriebs 2 und entlang der Längsachse X gegenüberliegend die Kontaktfläche 52 des zweiten Übertragungselements 5 den Ventilstößel 14 des Stellventils 2 kontaktiert und somit der Abstand entlang der Längsachse X zwischen Ventilstößel 14 des Stellventils 12 und des Stellelements 21 des Stellantriebs 2 kraftübertragend geschlossen bzw. überbrückt wird, siehe zum Beispiel Figur 11.

Die beiden Übertragungselemente 4, 5 weisen somit zunächst im vormontierten Zustand des Adapters 3-6, wenn dieser zwischen Stellventil 12 und Stellantrieb 2 wie zuvor beschrieben montiert ist, die minimale Länge des maximal eingeschraubten zweiten Übertragungselements 5 auf, siehe zum Beispiel Figur 4 und 10. Nun kann der Monteur mit einem langen und dünnen Gegenstand wie beispielsweise mit einem Schraubendreher oder mit einem Imbusschlüssel durch eine der beiden Durchgangsöffnungen 33 des Adaptergehäuses 3 hindurch in eine der Durchgangsöffnungen 54 des zweiten Übertragungselements 5 eingreifen und hierdurch das zweite Übertragungselement 5 in der Umfangsrichtung U derartig abschnittsweise drehen, dass das zweite Übertragungselement 5 aus dem ersten Übertragungselement 4 herausgeschraubt wird. Da die Durchgangsöffnungen 33 des Adaptergehäuses 3 von den Längsstegen 34 des Adaptergehäuses 3 in der Umfangsrichtung U begrenzt werden, kann der Monteur dies mehrfach wiederholen, um das zweite Übertragungselement 5 jeweils abschnittsweise zu bewegen.

Dies kann der Monteur wiederholen, bis die Kontaktfläche 40 des ersten Übertragungselements 4 mit dem Stellelement 21 des Stellantriebs 2 und die Kontaktfläche 52 des zweiten Übertragungselements 5 mit dem Ventilstößel 14 der Stellventils 12 derart in Kontakt gekommen sind, dass der Monteur das zweite Übertragungselement 5 nicht weiter verdrehen kann. Dann sind die beiden Übertragungselemente 4, 5 derart gegenüber einander verdreht bzw. verschraubt, dass die resultierende Länge der beiden Übertragungselemente 4, 5 entlang der Längsachse X genau dem Schließmaß S der Kombination von Stellventil 12 und Stellantrieb 2 entspricht. Dies kann als ein Bewegen 400 des ersten Übertragungselements 4 und des zweiten Übertragungselements 5 gegenüber einander entlang der Längsachse X angesehen werden. Entsprechend kann nun eine Kraftübertragung zwischen Ventilstößel 14 des Stellventils 12 und Stellelement 21 des Stellantriebs 2 erfolgen ebenso wie wenn der Ventilstößel 14 des Stellventils 12 und das Stellelement 21 der Stellantriebs 2 direkt miteinander in Kontakt wären. Somit können beliebige Stellventile 12 und Stellantriebe 2 miteinander kombiniert werden, ohne das jeweilige Schließmaß S zu kennen.

Hat der Monteur das zweite Übertragungselement 5 fest gegenüber dem ersten Übertragungselement 4 verschraubt bzw. angezogen, wie zuvor beschrieben, so kann diese Kraft aufgrund der zusammenwirkenden Gewinde 43, 51 der beiden Übertragungselemente 4, 5 ausreichend sein um die eingestellte resultierende Länge entlang der Längsachse X der beiden Übertragungselemente 4, 5 dauerhaft zu halten.

Um dies jedoch verlässlich dauerhaft sicherzustellen, kann der Monteur das zweite Übertragungselement 5 geringfügig gegenüber dem ersten Übertragungselement 4 derart zurückdrehen, bis zwei Durchgangsöffnungen 54 des Bedienrings 53 des zweiten Übertragungselements 5 innerhalb derselben Durchgangsöffnungen 33 des Adaptergehäuses 3 liegen und die beiden Rastelemente 61 des Sicherungselements 6 in diese Durchgangsöffnungen 33 des Adaptergehäuses 3 eingeführt und dort verrastet werden können, wodurch der Sicherungskörper 60 des Sicherungselements 6 die entsprechende Durchgangsöffnung 33 des Adaptergehäuses 3 ausfüllt und somit ein Verdrehen des zweiten Übertragungselements 5 verhindert, siehe zum Beispiel Figur 8. Auf diese Art und Weise kann die resultierende Länge entlang der Längsachse X der beiden Übertragungselemente 4, 5 in Abständen von 90° in der Umfangsrichtung U dauerhaft gesichert werden. Dies kann als ein Fixieren 500 angesehen werden.

### BEZUGSZEICHENLISTE (Teil der Beschreibung)

- F: Federkraft der Rückstellfeder 17
- S: Schließmaß des Stellventils 12
- R: radiale Richtung
- U: Umfangsrichtung
- X: Längsachse

- 1: Fluidverteiler; Heizkreisverteiler
- 10: Wandung
- 11: Innenraum; Innenvolumen
- 12: Stellventil
- 13: Leitungsanschluss des Stellventils 12
- 14: Ventilstößel
- 14a: Oberkante des Ventilstößels 14
- 15: Ventilteller
- 16: Ventildichtung
- 17: Rückstellfeder; Ventilfeder
- 17a: Anschlussgewindes des Stellventils 12
- 17b: Auflagefläche des Anschlussgewindes 17a des Stellventils 12
- 18: Fluid; Heizungswasser
- 19: Fluidleitung; Rohr

- 2: Stellantrieb
- 20: Gehäuse
- 21: Stellelement
- 22: Halterung
- 23: Halterungsring
- 24: Anschlussgewinde bzw. Innengewinde des Halterungsrings 23

- 3-6: Adapter; Adaptervorrichtung

- 3: Adaptergehäuse; Adapterhülse
- 30: Innenraum des Adaptergehäuses 3
- 31: Anschluss, Gewinde bzw. Innengewinde des Adaptergehäuses 3 für Stellventil 12
- 32: Anschluss, Gewinde bzw. Außengewinde des Adaptergehäuses 3 für Stellantrieb 2
- 33: Durchgangsöffnungen des Adaptergehäuses 3
- 34: Längsstege des Adaptergehäuses 3
- 35: Aufnahme des Adaptergehäuses 3
- 36: Längsschlitze der Aufnahme 35 des Adaptergehäuses 3
- 37: Längsstege der Aufnahme 35 des Adaptergehäuses 3

- 4: erstes Übertragungselement
- 40: Kontaktelement bzw. Kontaktfläche des ersten Übertragungselements 4 für Stellelement 21 des Stellantriebs 2
- 41: Führungselemente des ersten Übertragungselements 4
- 42: Aufnahme des ersten Übertragungselements 4
- 43: Gewinde bzw. Innengewinde der Aufnahme 42 des ersten Übertragungselements 4

- 5: zweites Übertragungselement
- 50: Abstandselement
- 51: Gewinde bzw. Außengewinde des Abstandselements 50
- 52: Kontaktelement bzw. Kontaktfläche des Abstandselements 50 für Ventilstößel 14 des Stellventils 12
- 53: Bedienelement; Bedienring
- 54: Öffnungen bzw. Durchgangsöffnungen des Bedienelements 53
- 55: Längsstege des Bedienelements 53

- 6: Sicherungselement; Verdrehsicherung
- 60: Sicherungskörper
- 61: radiale Vorsprünge; Rastelemente
- 61a: Raststege
- 61b: Rasthaken

- 100: Einstellen einer gemeinsamen Länge
- 200: Befestigen des Adapters 3-6 an dem Stellventil 12
- 300: Befestigen des Stellantriebs 2 auf dem Adapter 3-6
- 400: Bewegen des ersten Übertragungselements 4 und des zweiten Übertragungselements 5
- 500: Fixieren der resultierenden gemeinsamen Länge

## Patentansprüche

1. Adapter (3-6) zur Verbindung eines Stellantriebs (2) mit einem Stellventil (12), innerhalb dessen eine Rückstellfeder (17) als Ventilfeder angeordnet und derart mit dem Stellventil (12) und dessen Ventilstößel (14) verbunden ist, dass der Ventilstößel entlang einer Längsachse (X) von einer Federkraft (F) der Rückstellfeder von einem Leitungsanschluss (13) weg bewegt werden kann und der Leitungsanschlusses somit fluidführend geöffnet werden kann,
mit einem Adaptergehäuse (3) mit einem Anschluss (31), vorzugsweise mit einem Gewinde (31), besonders vorzugsweise mit einem Innengewinde (31), für das Stellventil (12) und mit einem Anschluss (32), vorzugsweise mit einem Gewinde (32), besonders vorzugsweise mit einem Außengewinde (32), für den Stellantrieb (2), welche sich entlang der Längsachse (X) gegenüberliegen,
mit einem ersten Übertragungselement (4), welches von dem Adaptergehäuse (3) dem Stellantrieb (2) zugewandt und entlang der Längsachse (X) beweglich aufgenommen wird, und mit einem zweiten Übertragungselement (5), welches von dem Adaptergehäuse (3) dem Stellventil (12) zugewandt und entlang der Längsachse (X) beweglich aufgenommen wird,
wobei das erste Übertragungselement (4) und das zweite Übertragungselement (5) ausgebildet sind, gemeinsam direkt oder indirekt entlang der Längsachse (X) eine Stellkraft des Stellantriebs (2) auf das Stellventil (12) zu übertragen,
wobei das erste Übertragungselement (4) und das zweite Übertragungselement (5) ausgebildet sind, gegenüber einander entlang der Längsachse (X) derart bewegt zu werden, so dass die resultierende gemeinsame Länge von erstem Übertragungselement (4) und zweitem Übertragungselement (5) entlang der Längsachse (X) derart verändert werden kann, dass das erste Übertragungselement (4) und das zweite Übertragungselement (5) direkt oder indirekt entlang der Längsachse (X) mit einem Stellelement (21) des Stellantriebs (2) und mit einem Ventilstößel (14) des Stellventils (12) in Kontakt kommen,
**dadurch gekennzeichnet, dass**
das erste Übertragungselement (4) ein Gewinde (43), vorzugsweise ein Innengewinde (43), aufweist,
das zweite Übertragungselement (5) ein Gewinde (51), vorzugsweise ein Außengewinde (51), aufweist und
das erste Übertragungselement (4) und das zweite Übertragungselement (5) ausgebildet sind, mittels der korrespondierenden Gewinde (43, 51) gegenüber einander um die Längsachse (X) derart gedreht zu werden, so dass die resultierende gemeinsame Länge von erstem Übertragungselement (4) und zweitem Übertragungselement (5) entlang der Längsachse (X) verändert werden kann.

2. Adapter (3-6) nach Anspruch 1, **dadurch gekennzeichnet, dass**
das erste Übertragungselement (4) oder das zweite Übertragungselement (5) um die Längsachse (X) verdrehsicher von dem Adaptergehäuse (3) aufgenommen wird.

3. Adapter (3-6) nach Anspruch 2, **dadurch gekennzeichnet, dass**
das Adaptergehäuse (3) dem Stellantrieb (2) zugewandt eine Aufnahme (35) aufweist, welche das erste Übertragungselement (4) entlang der Längsachse (X) beweglich und um die Längsachse (X) verdrehsicher aufnimmt,
wobei die Aufnahme (35) wenigstens einen Längsschlitz (36), vorzugsweise wenigstens ein Paar von einander diametral gegenüberliegenden Längsschlitzen (36), besonders vorzugsweise wenigstens zwei rechtwinkelig zueinander um die Längsachse (X) versetze Paare von einander diametral gegenüberliegenden Längsschlitzen (36), und das erste Übertragungselement (4) wenigstens ein Führungselement (41), vorzugsweise wenigstens ein Paar von einander diametral gegenüberliegenden Führungselementen (41), besonders vorzugsweise wenigstens zwei rechtwinkelig zueinander um die Längsachse (X) versetze Paare von einander diametral gegenüberliegenden Führungselementen (41), aufweist, welches radial in den Längsschlitz (35) eingreift, oder umgekehrt.

4. Adapter (3-6) nach einem der vorangehenden Ansprüche, **dadurch gekennzeichnet, dass**
das Adaptergehäuse (3) wenigstens eine Durchgangsöffnung (33), vorzugsweise wenigstens ein Paar von einander diametral gegenüberliegenden Durchgangsöffnungen (33), aufweist, welche sich vorzugsweise im Wesentlichen, besonders vorzugsweise um ca. 135°, in der Umfangsrichtung (U) erstreckt, und
das zweite Übertragungselement (5) wenigstens eine radial nach außen zeigende Öffnung (54) aufweist, welche durch die Durchgangsöffnung (33) des Adaptergehäuses (3) hindurch derart von einem Gegenstand, vorzugsweise von einem Schraubendreher oder von einem Imbusschlüssel, erreicht werden kann, so dass eine Person mittels des Gegenstands das zweite Übertragungselement (5) in der Umfangsrichtung (U) gegenüber dem Adaptergehäuse (3) drehen kann.

5. Adapter (3-6) nach einem der vorangehenden Ansprüche, **dadurch gekennzeichnet, dass**
die resultierende gemeinsame Länge von erstem Übertragungselement (4) und zweitem Übertragungselement (5) entlang der Längsachse (X), zumindest in einem vorbestimmten Maße, fixiert werden kann.

6. Adapter (3-6) nach Anspruch 5, **gekennzeichnet durch**
wenigstens ein Sicherungselement (6), welches ausgebildet ist, mittels wenigstens eines radialen Vorsprungs (61) durch die Durchgangsöffnung (33) des Adaptergehäuses (3) hindurch in eine von mehreren radial nach außen zeigenden Öffnungen (54) des zweiten Übertragungselements (5) einzugreifen, vorzugsweise in der Öffnung (54) des zweiten Übertragungselements (5) gehalten zu werden.

7. Adapter (3-6) nach Anspruch 6, **dadurch gekennzeichnet, dass**
sich ein Sicherungskörper (60) des Sicherungselements (6) in der Umfangsrichtung (U) soweit wie die Durchgangsöffnung (33) des Adaptergehäuses (3) erstreckt und ausgebildet ist, innerhalb der Durchgangsöffnung (33) des Adaptergehäuses (3) angeordnet zu werden.

8. Adapter (3-6) nach Anspruch 6 und 7, **dadurch gekennzeichnet, dass**
das zweite Übertragungselement (5) eine Mehrzahl von Öffnungen (54) aufweist, welche in der Umfangsrichtung (U), vorzugsweise gleichmäßig zueinander beabstandet, angeordnet sind.

9. Adapter (3-6) nach einem der Ansprüche 6 bis 8, **dadurch gekennzeichnet, dass**
das Sicherungselement (6) wenigstens zwei radiale Vorsprünge (61) aufweist, welche in der Umfangsrichtung (U) zueinander beabstandet sind,
wobei das zweite Übertragungselement (5) wenigstens zwei Öffnungen (54), vorzugsweise mehr als zwei Öffnungen (54), aufweist, welche in der Umfangsrichtung (U) korrespondierend zu den radialen Vorsprüngen (61) des Sicherungselements (6) zueinander beabstandet sind.

10. Adapter (3-6) nach einem der Ansprüche 6 bis 9, **dadurch gekennzeichnet, dass**
der radiale Vorsprung (61) des Sicherungselements (6) wenigstens einen entlang der Längsachse (X) federelastischen Raststeg (61a) mit wenigstens einem Rasthaken (61b) aufweist, welcher ausgebildet ist, die Öffnung (54) des zweiten Übertragungselements (5) radial zu hintergreifen.

11. Adapter (3-6) nach einem der vorangehenden Ansprüche, **dadurch gekennzeichnet, dass**
das Adaptergehäuse (3) zwischen dem Anschluss (31) für das Stellventil (12) und dem Anschluss (32) für den Stellantrieb (2) einen Innenraum (30) ausbildet, in welchem das erste Übertragungselement (4) und/oder das zweite Übertragungselement (5) angeordnet ist/sind,
wobei der Innenraum (30) entlang der Längsachse (X) zum Stellventil (12) hin zur Durchführung des ersten Übertragungselements (4) und/oder zum Stellantrieb (2) hin zur Durchführung des zweiten Übertragungselements (5) zumindest abschnittsweise offen ausgebildet ist.

12. Adapter (3-6) nach Anspruch 11, **dadurch gekennzeichnet, dass**
das erste Übertragungselement (4) und das zweite Übertragungselement (5) jeweils sich zumindest abschnittsweise derart radial erstreckend ausgebildet sind, um von dem Adaptergehäuse (3) innerhalb des Innenraums (30) formschlüssig gehalten zu werden.

13. Fluidverteiler (1)
mit wenigstens einem Stellventil (12) mit einem Adapter (3-6) nach einem der vorangehenden Ansprüche und mit einem Stellantrieb (2), welcher von dem Adapter (3-6) an dem Stellventil (12) gehalten wird.

14. Verfahren zum Verbinden eines Stellantriebs (2) mit einem Stellventil (12) mittels eines Adapters (3-6) nach einem der Ansprüche 1 bis 12 mit wenigstens den Schritten:
• Befestigen (200) eines Anschlusses (31) eines Adaptergehäuses (3) des Adapters (3-6) entlang einer Längsachse (X) an dem Stellventil (12),
• Befestigen (300) des Stellantriebs (2) auf einem Anschluss (32) des Adaptergehäuses (3) des Adapters (3-6) entlang der Längsachse (X), und
• Bewegen (400) des ersten Übertragungselements (4) und des zweiten Übertragungselements (5) gegenüber einander entlang der Längsachse (X) derart, so dass eine resultierende gemeinsame Länge vom ersten Übertragungselement (4) und vom zweiten Übertragungselement (5) entlang der Längsachse (X) derart eingestellt wird, dass das erste Übertragungselement (4) und das zweite Übertragungselement (5) direkt oder indirekt entlang der Längsachse (X) mit einem Stellelement (21) des Stellantriebs (2) und mit einem Ventilstößel (14) des Stellventils (12) in Kontakt kommen,
• wobei vorzugsweise vor dem Befestigen (200) an dem Stellventil (12) ein Einstellen (100) einer geringeren gemeinsamen Länge als der Abstand zwischen Stellelement (21) des Stellantriebs (3) und Ventilstößel (14) des Stellventils (12), vorzugsweise ein Einstellen (100) einer minimalen gemeinsamen Länge, erfolgt, und/oder
• wobei vorzugsweise nach dem Bewegen (400) des ersten Übertragungselements (4) und des zweiten Übertragungselements (5) ein Fixieren (500), vorzugsweise mittels eines Sicherungselements (6), der resultierenden gemeinsamen Länge von erstem Übertragungselement (4) und zweitem Übertragungselement (5) entlang der Längsachse (X), zumindest in einem vorbestimmten Maße, erfolgt.

## Claims

1. Adapter (3-6) for connecting an actuator (2) to a control valve (12), within which a return spring (17) is arranged as a valve spring and is connected to the control valve (12) and its valve tappet (14) in such a way that the valve tappet can be moved away from a line connection (13) along a longitudinal axis (X) by a spring force (F) of the return spring and the line connection can thus be opened in a fluid-conducting manner,
the adapter comprising an adapter housing (3) having a connection (31), preferably having a thread (31), particularly preferably having an internal thread (31), for the control valve (12) and having a connection (32), preferably having a thread (32), particularly preferably having an external thread (32), for the actuator (2), which connections are opposite each other along the longitudinal axis (X),
the adapter comprising a first transmission element (4) which is accommodated by the adapter housing (3) so as to face the actuator (2) and be movable along the longitudinal axis (X), and comprising a second transmission element (5) which is accommodated by the adapter housing (3) so as to face the control valve (12) and be movable along the longitudinal axis (X), the first transmission element (4) and the second transmission element (5) being designed to jointly transmit an actuating force of the actuator (2) to the control valve (12) directly or indirectly along the longitudinal axis (X),
the first transmission element (4) and the second transmission element (5) being designed to be moved relative to one another along the longitudinal axis (X) in such a way that the resulting combined length of the first transmission element (4) and the second transmission element (5) along the longitudinal axis (X) can be changed in such a way that the first transmission element (4) and the second transmission element (5) come into contact with an actuating element (21) of the actuator (2) and with a valve tappet (14) of the control valve (12) directly or indirectly along the longitudinal axis (X),
**characterized in that**
the first transmission element (4) has a thread (43), preferably an internal thread (43),
the second transmission element (5) has a thread (51), preferably an external thread (51),
and
the first transmission element (4) and the second transmission element (5) are designed to be rotated relative to one another about the longitudinal axis (X) by means of the corresponding threads (43, 51) in such a way that the resulting combined length of the first transmission element (4) and the second transmission element (5) can be changed along the longitudinal axis (X).

2. Adapter (3-6) according to claim 1, **characterized in that**
the first transmission element (4) or the second transmission element (5) is held by the adapter housing (3) so that it is secured against rotation about the longitudinal axis (X).

3. Adapter (3-6) according to claim 2, **characterized in that**
the adapter housing (3) has a receptacle (35) which faces the actuator (2) and which accommodates the first transmission element (4) so that it is movable along the longitudinal axis (X) and secured against rotation about the longitudinal axis (X),
the receptacle (35) having at least one longitudinal slot (36), preferably at least one pair of diametrically opposed longitudinal slots (36), particularly preferably at least two pairs of diametrically opposed longitudinal slots (36) offset at right angles to one another about the longitudinal axis (X), and the first transmission element (4) having at least one guide element (41), preferably at least one pair of diametrically opposed guide elements (41), particularly preferably at least two pairs of diametrically opposed guide elements (41) offset at right angles to one another about the longitudinal axis (X), which engages radially in the longitudinal slot (35), or vice versa.

4. Adapter (3-6) according to any of the preceding claims, **characterized in that**
the adapter housing (3) has at least one through-opening (33), preferably at least one pair of diametrically opposed through-openings (33), which preferably extends substantially, particularly preferably approximately 135°, in the circumferential direction (U), and
the second transmission element (5) has at least one radially outwardly facing opening (54) which can be reached by an object, preferably a screwdriver or an Allen wrench, through the through-opening (33) in the adapter housing (3) in such a way that a person can rotate the second transmission element (5) in the circumferential direction (U) relative to the adapter housing (3) by means of the object.

5. Adapter (3-6) according to any of the preceding claims, **characterized in that**
the resulting combined length of the first transmission element (4) and the second transmission element (5) along the longitudinal axis (X) can be fixed, at least to a predetermined extent.

6. Adapter (3-6) according to claim 5, **characterized by**
at least one securing element (6) which is designed to engage by means of at least one radial projection (61) through the through-opening (33) in the adapter housing (3) into one of a plurality of radially outwardly facing openings (54) in the second transmission element (5), preferably to be held in the opening (54) in the second transmission element (5).

7. Adapter (3-6) according to claim 6, **characterized in that**
a securing body (60) of the securing element (6) extends in the circumferential direction (U) as far as the through-opening (33) in the adapter housing (3) and is designed to be arranged within the through-opening (33) in the adapter housing (3).

8. Adapter (3-6) according to claim 6 and 7, **characterized in that**
the second transmission element (5) has a plurality of openings (54) which are arranged in the circumferential direction (U), preferably so as to be evenly spaced from one another.

9. Adapter (3-6) according to any of claims 6 to 8, **characterized in that**
the securing element (6) has at least two radial projections (61) which are spaced apart from one another in the circumferential direction (U),
the second transmission element (5) having at least two openings (54), preferably more than two openings (54), which are spaced apart from one another in the circumferential direction (U) in a manner corresponding to the radial projections (61) of the securing element (6).

10. Adapter (3-6) according to any of claims 6 to 9, **characterized in that**
the radial projection (61) of the securing element (6) has at least one locking member (61a) which is resilient along the longitudinal axis (X) and comprises at least one locking hook (61b) that is designed to radially engage behind the opening (54) in the second transmission element (5).

11. Adapter (3-6) according to any of the preceding claims, **characterized in that**
the adapter housing (3) forms an interior space (30) between the connection (31) for the control valve (12) and the connection (32) for the actuator (2), in which interior space the first transmission element (4) and/or the second transmission element (5) is/are arranged,
the interior space (30) being designed to be open at least in some portions along the longitudinal axis (X) toward the control valve (12) for the passage of the first transmission element (4) and/or toward the actuator (2) for the passage of the second transmission element (5).

12. Adapter (3-6) according to claim 11, **characterized in that**
the first transmission element (4) and the second transmission element (5) are each designed to extend radially at least in some portions in such a way as to be held in a form-fitting manner within the interior space (30) by the adapter housing (3).

13. Fluid distributor (1)
comprising at least one control valve (12) having an adapter (3-6) according to any of the preceding claims and comprising an actuator (2) which is held on the control valve (12) by the adapter (3-6).

14. Method for connecting an actuator (2) to a control valve (12) by means of an adapter (3-6) according to any of claims 1 to 12, comprising at least the steps of:
• fastening (200) a connection (31) of an adapter housing (3) of the adapter (3-6) to the control valve (12) along a longitudinal axis (X),
• fastening (300) the actuator (2) to a connection (32) of the adapter housing (3) of the adapter (3-6) along the longitudinal axis (X), and
• moving (400) the first transmission element (4) and the second transmission element (5) relative to each other along the longitudinal axis (X) in such a way that a resulting combined length of the first transmission element (4) and the second transmission element (5) along the longitudinal axis (X) is set in such a way that the first transmission element (4) and the second transmission element (5) come into contact with an actuating element (21) of the actuator (2) and with a valve tappet (14) of the control valve (12) directly or indirectly along the longitudinal axis (X),
• wherein, preferably before the fastening (200) to the control valve (12), a combined length that is smaller than the distance between the actuating element (21) of the actuator (3) and the valve tappet (14) of the control valve (12) is set (100), preferably a minimum combined length is set (100), and/or
• wherein, preferably after the movement (400) of the first transmission element (4) and the second transmission element (5), the resulting combined length of the first transmission element (4) and the second transmission element (5) along the longitudinal axis (X) is fixed (500), at least to a predetermined extent, preferably by means of a securing element (6).

## Revendications

1. Adaptateur (3-6) permettant de relier un servomoteur (2) à une soupape de réglage (12), adaptateur à l'intérieur duquel un ressort de rappel (17) est disposé comme ressort de soupape et est relié à la soupape de réglage (12) et à son poussoir de soupape (14) de telle sorte que le poussoir de soupape peut être éloigné d'un raccord de conduite (13) le long d'un axe longitudinal (X) par une force élastique (F) du ressort de rappel et le raccord de conduite peut ainsi être ouvert en mode de conduction de fluide,
comportant un boîtier d'adaptateur (3) comportant un raccord (31), comportant de préférence un filetage (31), comportant de manière particulièrement préférée un filetage intérieur (31), pour la soupape de réglage (12) et comportant un raccord (32), comportant de préférence un filetage (32), comportant de manière particulièrement préférée un filetage extérieur (32), pour le servomoteur (2), lesquels se font face le long de l'axe longitudinal (X),
comportant un premier élément de transmission (4), lequel est tourné vers le servomoteur (2) depuis le boîtier d'adaptateur (3) et est reçu de manière mobile le long de l'axe longitudinal (X), et comportant un second élément de transmission (5), lequel est tourné vers la soupape de réglage (12) depuis le boîtier d'adaptateur (3) et est reçu de manière mobile le long de l'axe longitudinal (X),
dans lequel le premier élément de transmission (4) et le second élément de transmission (5) sont conçus pour transmettre ensemble, directement ou indirectement le long de l'axe longitudinal (X), une force de réglage du servomoteur (2) à la soupape de réglage (12),
dans lequel le premier élément de transmission (4) et le second élément de transmission (5) sont conçus pour être déplacés l'un par rapport à l'autre le long de l'axe longitudinal (X) en sorte que la longueur commune résultante depuis le premier élément de transmission (4) et depuis le second élément de transmission (5) puisse être modifiée le long de l'axe longitudinal (X) de telle sorte que le premier élément de transmission (4) et le second élément de transmission (5) entrent en contact directement ou indirectement le long de l'axe longitudinal (X) avec un élément de réglage (21) du servomoteur (2) et avec un poussoir de soupape (14) de la soupape de réglage (12),
**caractérisé en ce que**
le premier élément de transmission (4) présente un filetage (43), de préférence un filetage intérieur (43),
le second élément de transmission (5) présente un filetage (51), de préférence un filetage extérieur (51),
et
le premier élément de transmission (4) et le second élément de transmission (5) sont conçus pour être tournés l'un par rapport à l'autre autour de l'axe longitudinal (X) à l'aide des filetages (43, 51) correspondants, en sorte que la longueur commune résultante depuis le premier élément de transmission (4) et depuis le second élément de transmission (5) peut être modifiée le long de l'axe longitudinal (X).

2. Adaptateur (3-6) selon la revendication 1, **caractérisé en ce que**
le premier élément de transmission (4) ou le second élément de transmission (5) est reçu par le boîtier d'adaptateur (3) sans possibilité de rotation autour de l'axe longitudinal (X).

3. Adaptateur (3-6) selon la revendication 2, **caractérisé en ce que**
le boîtier d'adaptateur (3) présente, en regard du servomoteur (2), un logement (35) qui reçoit le premier élément de transmission (4) de manière mobile le long de l'axe longitudinal (X) et sans possibilité de rotation autour de l'axe longitudinal (X),
dans lequel le logement (35) présente au moins une fente longitudinale (36), de préférence au moins une paire de fentes longitudinales (36) diamétralement opposées, de manière particulièrement préférée au moins deux paires de fentes longitudinales (36) diamétralement opposées décalées l'une par rapport à l'autre à angle droit autour de l'axe longitudinal (X), et le premier élément de transmission (4) présente au moins un élément de guidage (41), de préférence au moins une paire d'éléments de guidage (41) diamétralement opposés, de manière particulièrement préférée au moins deux paires d'éléments de guidage (41) diamétralement opposés décalés l'une par rapport à l'autre à angle droit autour de l'axe longitudinal (X), lequel vient en prise radialement dans la fente longitudinale (35), ou inversement.

4. Adaptateur (3-6) selon l'une des revendications précédentes,
**caractérisé en ce que**
le boîtier d'adaptateur (3) présente au moins une ouverture de passage (33), de préférence au moins une paire d'ouvertures de passage (33) diamétralement opposées l'une à l'autre, laquelle ouverture de passage s'étend de préférence sensiblement, de manière particulièrement préférée d'environ 135°, dans la direction circonférentielle (U), et
le second élément de transmission (5) présente au moins une ouverture (54) orientée radialement vers l'extérieur, laquelle ouverture peut être atteinte par un objet, de préférence un tournevis ou une clé Allen, à travers l'ouverture de passage (33) du boîtier d'adaptateur (3), en sorte qu'une personne peut faire tourner le second élément de transmission (5) dans la direction circonférentielle (U) par rapport au boîtier d'adaptateur (3) par le biais de l'objet.

5. Adaptateur (3-6) selon l'une des revendications précédentes,
**caractérisé en ce que**
la longueur commune résultante depuis le premier élément de transmission (4) et depuis le second élément de transmission (5) peut être fixée le long de l'axe longitudinal (X), au moins dans une mesure prédéterminée.

6. Adaptateur (3-6) selon la revendication 5, **caractérisé par**
au moins un élément de blocage (6) qui est conçu pour venir en prise, par le biais d'au moins une saillie radiale (61), à travers l'ouverture de passage (33) du boîtier d'adaptateur (3), dans l'une parmi plusieurs ouvertures (54), orientées radialement vers l'extérieur, du second élément de transmission (5), de préférence pour être maintenu dans l'ouverture (54) du second élément de transmission (5).

7. Adaptateur (3-6) selon la revendication 6, **caractérisé en ce que**
un corps de blocage (60) de l'élément de blocage (6) s'étend dans la direction circonférentielle (U) aussi loin que l'ouverture de passage (33) du boîtier d'adaptateur (3) et est conçu pour être disposé à l'intérieur de l'ouverture de passage (33) du boîtier d'adaptateur (3).

8. Adaptateur (3-6) selon les revendications 6 et 7, **caractérisé en ce que**
le second élément de transmission (5) présente une pluralité d'ouvertures (54) qui sont disposées dans la direction circonférentielle (U), de préférence à égale distance les unes des autres.

9. Adaptateur (3-6) selon l'une des revendications 6 à 8,
**caractérisé en ce que**
l'élément de blocage (6) présente au moins deux saillies radiales (61) qui sont espacées l'une de l'autre dans la direction circonférentielle (U),
dans lequel le second élément de transmission (5) présente au moins deux ouvertures (54), de préférence plus de deux ouvertures (54) qui sont espacées l'une de l'autre dans la direction circonférentielle (U) en correspondance avec les saillies radiales (61) de l'élément de blocage (6).

10. Adaptateur (3-6) selon l'une des revendications 6 à 9,
**caractérisé en ce que**
la saillie radiale (61) de l'élément de blocage (6) présente au moins une barrette d'encliquetage (61a) élastique le long de l'axe longitudinal (X) et comportant au moins un crochet d'encliquetage (61b), lequel est conçu pour venir en prise radialement par derrière avec l'ouverture (54) du second élément de transmission (5).

11. Adaptateur (3-6) selon l'une des revendications précédentes,
**caractérisé en ce que**
le boîtier d'adaptateur (3) forme, entre le raccord (31) pour la soupape de réglage (12) et le raccord (32) pour le servomoteur (2), un espace intérieur (30) dans lequel est/sont disposé(s) le premier élément de transmission (4) et/ou le second élément de transmission (5),
dans lequel l'espace intérieur (30) est réalisé ouvert au moins dans certaines sections le long de l'axe longitudinal (X) vers la soupape de réglage (12) pour le passage du premier élément de transmission (4) et/ou vers le servomoteur (2) pour le passage du second élément de transmission (5).

12. Adaptateur (3-6) selon la revendication 11, **caractérisé en ce que**
le premier élément de transmission (4) et le second élément de transmission (5) sont respectivement conçus de manière à s'étendre radialement au moins dans certaines sections de façon à être maintenus, par complémentarité de forme, par le boîtier d'adaptateur (3) à l'intérieur de l'espace intérieur (30).

13. Distributeur de fluide (1)
comportant au moins une soupape de réglage (12) comportant un adaptateur (3-6) selon l'une des revendications précédentes et comportant un servomoteur (2) qui est maintenu par l'adaptateur (3-6) sur la soupape de réglage (12).

14. Procédé permettant de relier un servomoteur (2) à une soupape de réglage (12) par le biais d'un adaptateur (3-6) selon l'une des revendications 1 à 12, comportant au moins les étapes suivantes :
• fixation (200) d'un raccord (31) d'un boîtier d'adaptateur (3) de l'adaptateur (3-6) le long d'un axe longitudinal (X) à la soupape de réglage (12),
• fixation (300) du servomoteur (2) sur un raccord (32) du boîtier d'adaptateur (3) de l'adaptateur (3-6) le long de l'axe longitudinal (X), et
• déplacement (400) du premier élément de transmission (4) et du second élément de transmission (5) l'un par rapport à l'autre le long de l'axe longitudinal (X) en sorte qu'une longueur commune résultante du premier élément de transmission (4) et du second élément de transmission (5) soit réglée le long de l'axe longitudinal (X) de telle sorte que le premier élément de transmission (4) et le second élément de transmission (5) entrent en contact directement ou indirectement le long de l'axe longitudinal (X) avec un élément de réglage (21) du servomoteur (2) et avec un poussoir de soupape (14) de la soupape de réglage (12),
• dans lequel un réglage (100) d'une longueur commune inférieure à la distance entre l'élément de réglage (21) du servomoteur (3) et le poussoir de soupape (14) de la soupape de réglage (12), de préférence un réglage (100) d'une longueur commune minimale, est effectué de préférence avant la fixation (200) à la soupape de réglage (12), et/ou
• dans lequel une fixation (500), de préférence par le biais d'un élément de blocage (6), de la longueur commune résultante depuis le premier élément de transmission (4) et depuis le second élément de transmission (5) le long de l'axe longitudinal (X), au moins dans une mesure prédéterminée, est effectuée de préférence après le déplacement (400) du premier élément de transmission (4) et du second élément de transmission (5).
